(19) Europäisches Patentamt / European Patent Office / Office européen des brevets

(11) **EP 3 685 259 B1**

(12) **FASCICULE DE BREVET EUROPEEN**

(45) Date de publication et mention
de la délivrance du brevet:
**25.05.2022 Bulletin 2022/21**

(21) Numéro de dépôt: **18780196.4**

(22) Date de dépôt: **14.09.2018**

(51) Classification Internationale des Brevets (IPC):
**G06F 9/30** (2018.01)     **G06F 21/12** (2013.01)
**H04L 9/00** (2022.01)

(52) Classification Coopérative des Brevets (CPC):
**H04L 9/004; G06F 9/30076; G06F 21/12**

(86) Numéro de dépôt international:
**PCT/FR2018/052263**

(87) Numéro de publication internationale:
**WO 2019/058047 (28.03.2019 Gazette 2019/13)**

(54) **PROCÉDÉ D'EXÉCUTION D'UN CODE MACHINE D'UNE FONCTION SÉCURISÉE**

VERFAHREN ZUM AUSFÜHREN EINES MASCHINENCODES EINER SICHEREN FUNKTION

METHOD FOR EXECUTING A MACHINE CODE OF A SECURE FUNCTION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **22.09.2017 FR 1758799**

(43) Date de publication de la demande:
**29.07.2020 Bulletin 2020/31**

(73) Titulaire: **Commissariat à l'Energie Atomique et
aux Energies
Alternatives
75015 Paris (FR)**

(72) Inventeur: **COUROUSSE, Damien
38100 Grenoble (FR)**

(74) Mandataire: **Colombo, Michel
Innovation Competence Group
310, avenue Berthelot
69372 Lyon Cedex 08 (FR)**

(56) Documents cités:
**CA-A1- 2 327 037      FR-A1- 2 985 337
US-A1- 2017 124 322**

## Description

L'invention concerne un procédé d'exécution d'un code machine d'une fonction sécurisée par un microprocesseur ainsi qu'un code binaire comportant le code machine de cette fonction sécurisée. L'invention concerne également :

- un support d'enregistrement d'informations et un appareil pour la mise en œuvre de ce procédé d'exécution, et
- un compilateur pour générer ce code binaire.

Pour obtenir des informations sur un code binaire ou provoquer un fonctionnement inattendu du code binaire, il est connu de le soumettre à des attaques connues sous le terme d'« injection de fautes » ou « fault attack » en anglais. Ces attaques consistent à perturber le fonctionnement du microprocesseur lors de l'exécution du code machine par divers moyens physiques comme des modifications des tensions d'alimentation, des modifications du signal d'horloge, l'exposition du microprocesseur à des ondes électromagnétiques et autres.

À l'aide de telles perturbations, un attaquant peut altérer l'intégrité des instructions machines ou des données pour, par exemple, retrouver une clé secrète d'un système cryptographique, contourner des mécanismes de sécurité tels que la vérification d'un code PIN lors d'une authentification ou simplement empêcher l'exécution d'une fonction essentielle pour la sécurité d'un système critique.

Une attaque par injection de fautes peut provoquer :

- une altération transitoire ou permanente du contenu de la mémoire et donc des données ou du code du programme, ou
- une altération du fonctionnement du microprocesseur, par exemple, par des modifications des valeurs des registres de données, des instructions en cours d'exécution par l'unité arithmétique et logique, du fonctionnement de l'unité arithmétique et logique, de l'état des registres de statut et de contrôle ou autres.

Suivant la nature de la faute, on peut considérer trois types d'altérations qui auront un effet sur le programme exécuté :

1) une altération des instructions du code machine exécuté telle qu'une altération de la mémoire ou une altération de l'état du processeur au moment du traitement de l'instruction fautée,
2) une altération des valeurs stockées dans des variables ou des registres, et
3) une altération du flot de contrôle du code machine, par exemple, par modification de la mémoire programme ou par modification du compteur ordinal ou par modification des registres de statut dans le cas d'un branchement conditionnel.

Le flot de contrôle correspond au chemin d'exécution suivi lors de l'exécution du code machine. Le flot de contrôle est classiquement représenté sous la forme d'un graphe orienté connu sous le terme de graphe de flot de contrôle ou « control flow graph » en anglais.

Lorsque l'altération empêche seulement l'exécution d'une ou plusieurs des instructions du code machine ou lorsque l'altération a un effet sur le processeur équivalent au fait de ne pas exécuter l'instruction perturbée, on parle alors de saut d'instructions. Lorsque l'altération remplace une ou plusieurs des instructions du code machine par d'autres instructions exécutables par le microprocesseur, on parle alors de remplacement d'instructions.

Lorsque l'altération modifie une instruction de branchement ou lorsque l'altération consiste à sauter une instruction de branchement, on observe un effet de détournement du flot de contrôle. L'effet de détournement du flot de contrôle peut être observé quand une instruction de branchement est altérée ou quand la condition impliquée dans un branchement conditionnel est modifiée ou quand l'adresse de retour d'une fonction est modifiée ou encore quand le compteur ordinal du microprocesseur est modifié.

Le code machine d'une fonction peut être instrumenté pour permettre la détection et le signalement des fautes provoquées par l'injection de fautes. Lorsque le code machine d'une fonction est ainsi instrumenté, ce code machine est qualifié de « code machine d'une fonction sécurisée ». En effet, contrairement au code machine d'une fonction non-sécurisée, ce code machine est apte à permettre le signalement des fautes typiquement rencontrées en cas d'attaque par injection de fautes.

Par exemple, des procédés connus d'exécution d'un code machine d'une fonction sécurisée par un microprocesseur comporte :

a) la fourniture du code machine enregistré dans une mémoire principale, ce code machine étant formé par une succession de blocs de base dans lesquels :

- chaque bloc de base comporte une succession d'instructions systématiquement exécutées les unes après les autres lors de l'exécution du code machine par le microprocesseur, parmi ces instructions, au moins certaines d'entre elles étant des instructions à protéger,
- chaque bloc de base débute à une adresse de branchement et se termine par une instruction de branchement vers une adresse de branchement d'un autre bloc de base, le bloc de base qui débute à l'adresse de branchement étant appelé bloc de base suivant et le bloc de base qui se termine par une instruction de branchement vers cette adresse de branchement étant appelé bloc de base précédent,

b) lors de l'exécution du code machine par le microprocesseur, le procédé comporte les opérations suivantes :

1) le microprocesseur charge puis décode les instructions des blocs de base précédent et suivant du code machine, puis chaque instruction décodée est exécutée par une unité arithmétique et logique du microprocesseur,

2) à chaque fois qu'une instruction à protéger du bloc de base précédent est chargée, un module matériel de sécurisation du microprocesseur construit, en appliquant une fonction $F_{cs}()$ préprogrammée, une nouvelle valeur d'une signature à partir de la valeur de cette instruction à protéger et de la précédente valeur de la signature, cette signature étant ainsi fonction des valeurs des différentes instructions à protéger du bloc de base précédent,

3) le microprocesseur charge un vecteur d'initialisation contenu dans le code machine et le module matériel de sécurisation calcule, à partir de ce vecteur d'initialisation chargé et en appliquant une fonction $F_{vs}()$ préprogrammée, une valeur attendue pour la signature du bloc de base précédent,

4) en réponse au chargement d'une instruction prédéterminée, le module matériel de sécurisation compare la valeur construite de la signature à la valeur attendue de cette signature calculée à partir du vecteur d'initialisation chargé, et

5) seulement si ces valeurs ne correspondent pas, le module matériel de sécurisation déclenche le signalement d'une faute lors de l'exécution de ce code machine et, dans le cas contraire, inhibe un tel signalement.

Par exemple, un tel procédé d'exécution est décrit dans l'article suivant : Ruan de Clercq et AL : « SOFIA : Software and Control Flow Integrity Architecture », Elsevier, Computers & Security, Volume 68, 07/2017, Pages 16-35.

Ce procédé connu est intéressant car il permet à la fois de contrôler l'intégrité des blocs de base et du flot de contrôle. Pour contrôler l'intégrité des blocs de base, chaque bloc de base débute par des instructions qui définissent la valeur attendue de la signature de ce bloc de base. Ensuite, lors de l'exécution des instructions à protéger de ce bloc de base, une valeur est construite, à partir des instructions exécutées, pour la signature de ce bloc de base. Si la valeur construite de la signature correspond à la valeur attendue, alors l'intégrité du bloc de base est confirmée.

Pour contrôler l'intégrité du flot de contrôle, le procédé connu propose de chiffrer chaque instruction à protéger du bloc de base avec une valeur fonction de la valeur actuelle du compteur ordinal et de sa précédente valeur. Ainsi, si le flot de contrôle est modifié, la valeur précédente ou actuelle du compteur ordinal ne correspond pas à la valeur attendue et le déchiffrement correct des instructions à protéger devient impossible.

De l'état de la technique est également connu de :

- US2017/124322A1,
- CA2327037A1, et
- FR2985337A1.

Le procédé décrit dans US2017/124322A1 ne permet pas de contrôler l'intégrité des instructions des blocs de base.

L'invention vise à contrôler à la fois l'intégrité des blocs de base et l'intégrité du flot de contrôle mais de façon plus simple que dans les procédés connus. Elle a donc pour objet un tel procédé d'exécution conforme à la revendication 1.

Les modes de réalisation de ce procédé d'exécution peuvent comporter une ou plusieurs des caractéristiques des revendications dépendantes.

L'invention a également pour objet un code binaire comportant un code machine d'une fonction sécurisée pour la mise en œuvre du procédé revendiqué.

L'invention a également pour objet un support d'enregistrement d'informations lisible par un microprocesseur, ce support d'enregistrement d'informations contenant le code binaire revendiqué.

L'invention a également pour objet un appareil électronique pour la mise en œuvre du procédé revendiqué.

Enfin, l'invention a également pour objet un compilateur apte à transformer automatiquement un code source d'un programme contenant une fonction sécurisée en un code binaire comportant un code machine d'une fonction sécurisée, dans lequel le compilateur est apte à transformer automatiquement le code source en un code binaire revendiqué.

L'invention sera mieux comprise à la lecture de la description qui va suivre, donnée uniquement à titre d'exemple non limitatif et faite en se référant aux dessins sur lesquels :

- la figure 1 est une illustration schématique de l'architecture d'un appareil électronique apte à exécuter un code machine d'une fonction sécurisée ;
- les figures 2 et 3 sont des illustrations schématiques de différentes portions d'un code machine d'une fonction sécurisée susceptible d'être exécutée par l'appareil de la figure 1 ;
- la figure 4 est un organigramme d'un procédé d'exécution du code machine d'une fonction sécurisée ;
- la figure 5 est une illustration schématique d'un compilateur apte à générer le code machine exécuté par l'appareil de la figure 1.

Notations et définitions :

Dans ces figures, les mêmes références sont utilisées pour désigner les mêmes éléments. Dans la suite de cette description, les caractéristiques et fonctions bien connues de l'homme du métier ne sont pas décrites en détails.

Dans cette description, les définitions suivantes sont adoptées.

Un « programme » désigne un ensemble d'une ou de plusieurs fonctions prédéterminées que l'on souhaite faire exécuter par un microprocesseur.

Un « code source » est une représentation du programme dans un langage informatique, n'étant pas directement exécutable par un microprocesseur et étant destiné à être transformé par un compilateur en un code machine directement exécutable par le microprocesseur.

Un programme ou un code est dit être « directement exécutable » lorsqu'il est apte à être exécuté par un microprocesseur sans que ce microprocesseur n'ait besoin au préalable de le compiler au moyen d'un compilateur ou de l'interpréter au moyen d'un interpréteur.

Une « instruction » désigne une instruction machine exécutable par un microprocesseur. Une telle instruction est constituée :

- d'un opcode, ou code d'opération, codant la nature de l'opération à exécuter, et
- d'un ou plusieurs opérandes définissant la ou les valeurs des paramètres de cette opération.

La « valeur d'une instruction » est une valeur numérique obtenue, à l'aide d'une fonction bijective, à partir de la succession de « 0 » et de « 1 » qui code, en langage machine, cette instruction. Cette fonction bijective peut être la fonction identité.

Un « code machine » est un ensemble d'instructions machines. Il s'agit typiquement d'un fichier contenant une succession de bits portant la valeur « 0 » ou « 1 », ces bits codant les instructions à exécuter par le microprocesseur. Le code machine est directement exécutable par le microprocesseur, c'est-à-dire sans nécessiter une compilation ou une interprétation préalable.

Un « code binaire » est un fichier contenant une succession de bits portant la valeur « 0 » ou « 1 ». Ces bits codent des données et des instructions à exécuter par le microprocesseur. Ainsi, le code binaire comprend au moins un code machine et en plus, généralement, des données numériques traitées par ce code machine.

Un « flot d'instructions » est une succession d'instructions classées les unes après les autres et qui forme, dans le code machine, une suite ordonnée de bits. Le flot d'instructions débute par une instruction initiale et se termine par une instruction finale. Par rapport à une instruction donnée du flot d'instructions, les instructions situées du côté de l'instruction initiale sont appelées « instructions précédentes » et les instructions situées du côté de l'instruction finale, sont appelées « instructions suivantes ». Dans ce texte, ce flot d'instructions en mémoire est découpé en une succession de blocs de base immédiatement consécutifs ou séparés par des blocs de données.

Dans ce texte, un « bloc de base » est un groupe d'instructions successives du flot d'instructions qui débute à une adresse de branchement et qui se termine par une seule instruction de branchement explicite ou implicite. Une instruction de branchement explicite se caractérise par la présence explicite d'un opcode dans le code machine qui code l'instruction de branchement. Une instruction de branchement implicite correspond au cas où l'exécution d'un bloc de base précédent se poursuit systématiquement par l'exécution d'un bloc de base suivant situé, dans le code machine, immédiatement après le bloc de base précédent. Dans ce cas, étant donné qu'en absence d'instruction de branchement explicite, les instructions du code machine sont exécutées dans l'ordre les unes après les autres, il n'est pas nécessaire d'introduire à la fin du bloc de base précédent une instruction de branchement explicite vers le bloc de base suivant. Dans cette description, on dit que dans ce cas, le bloc de base précédent se termine par une instruction de branchement implicite car elle n'est pas explicitement codée dans le code machine. Dans ce cas, le bloc de base précédent se termine juste avant l'adresse de branchement du bloc de base suivant. Dans cette demande, l'expression « instruction de branchement » désigne une instruction de branchement explicite à défaut de mention contraire. Ainsi, l'exécution d'un bloc de base débute systématiquement par l'exécution de l'instruction située à son adresse de branchement et se termine systématiquement par l'exécution de l'instruction de branchement qui termine ce bloc de base. Un bloc de base ne comporte pas d'autres instructions de branchement que celle située à la fin de ce bloc de base. Ainsi, les instructions d'un bloc de base sont systématiquement toutes lues par le microprocesseur les unes après les autres dans l'ordre où elles sont présentes dans ce bloc de base. L'instruction de branchement peut diriger, lorsqu'elle est exécutée, le flot de contrôle systématiquement vers la même adresse de branchement ou, en alternance, vers différentes adresses de branchement. Ce dernier cas de figure se rencontre, par exemple, lorsqu'à la fin du bloc de base exécuté, le flot de contrôle peut se poursuivre vers un premier et, en alternance, vers un deuxième bloc de base.

Une « instruction de branchement» est une instruction qui, lorsqu'elle est exécutée par le microprocesseur, déclenche un saut vers l'adresse de branchement d'un autre bloc de base. Cette instruction de branchement comporte donc au moins comme paramètre l'adresse de branchement de cet autre bloc de base. Typiquement, à cet effet, cette instruction remplace la valeur actuelle du compteur ordinal par la valeur de l'adresse de branchement. On rappelle que le compteur ordinal contient l'adresse de la prochaine instruction à exécuter par le microprocesseur. En absence d'instruction de branchement, à chaque fois qu'une instruction est exécutée, le compteur ordinal est incrémenté de la taille de l'instruction actuellement exécutée. En absence d'instruction de branchement, les instructions sont systématiquement exécutées séquentiellement les unes après les autres dans l'ordre où elles sont enregistrées dans une mémoire principale. L'instruction de branchement peut être inconditionnelle, c'est à dire que le saut vers l'adresse de branchement est systématiquement réalisé dès que cette instruction est exécutée. Une instruction de branchement inconditionnel est par exemple l'instruction « JMP » en langage assembleur pour les microprocesseurs de la série x86. L'instruction de branchement peut aussi être conditionnelle, c'est-à-dire que le saut vers l'adresse de branchement est déclenché lors de son exécution uniquement si une condition particulière est vérifiée. Par exemple, une instruction de branchement conditionnel est une instruction « JE », « JA » ou « JNE » en assembleur. L'instruction de branchement peut aussi bien être un appel à une fonction. Dans ce texte, le terme « instruction de branchement» désigne aussi bien les instructions de branchement direct qu'indirect. Une instruction de branchement direct est une instruction de branchement qui contient directement la valeur numérique de l'adresse de branchement. Une instruction de branchement indirect, est une instruction de branchement vers une adresse de branchement contenue dans une mémoire ou un registre du microprocesseur. Ainsi, contrairement à une instruction de branchement direct, une instruction de branchement indirect ne contient pas directement la valeur numérique de l'adresse de branchement.

Une « adresse de branchement » est l'adresse dans la mémoire principale à laquelle se trouve la première instruction exécutée d'un bloc de base. Par la suite, on parle d'adresse de branchement même pour les blocs de base dont la première instruction est exécutée suite à l'exécution d'une instruction de branchement implicite.

On parlera d'exécution d'une fonction pour désigner l'exécution des instructions réalisant cette fonction.

Dans un souci de simplification, dans cette description et dans les figures, les instructions ne sont pas représentées sous forme binaire, mais plutôt sous une forme symbolique exprimée dans un langage évolué de plus haut niveau.

Description d'un mode de réalisation :

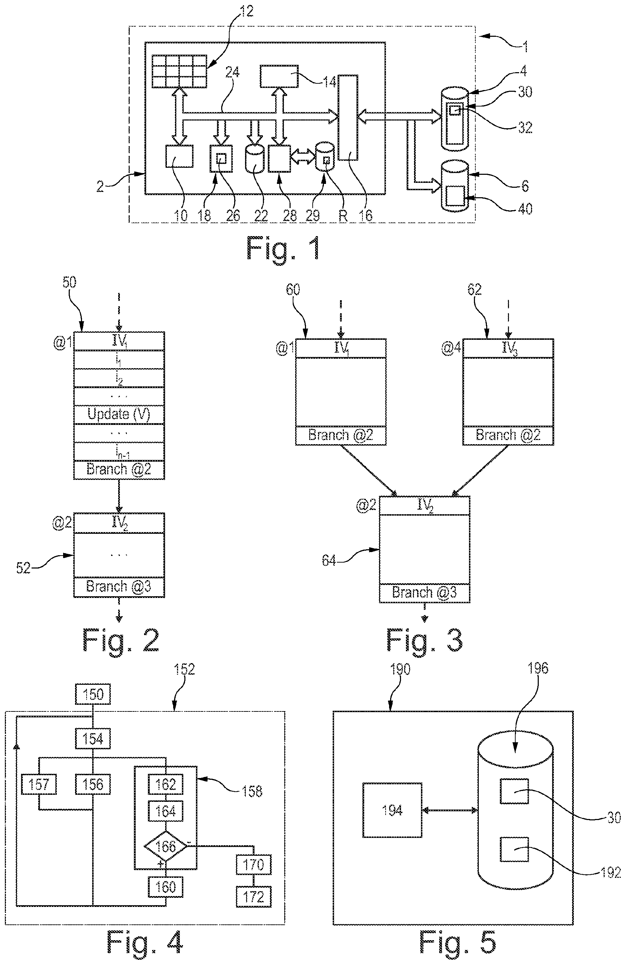

La figure 1 représente un appareil électronique 1 comportant un microprocesseur 2, une mémoire principale 4 et un support 6 de stockage de masse. Par exemple, l'appareil 1 est un ordinateur, un smartphone, une tablette électronique, une carte à puce ou similaire.

Le microprocesseur 2 comporte ici :

- une unité arithmétique et logique 10 ;
- un ensemble 12 de registres ;
- un module de commande 14 ;
- une interface 16 d'entrée/sortie de données,
- un chargeur 18 d'instructions comportant un compteur ordinal 26,
- une file 22 d'instructions à exécuter, et
- un module matériel 28 de sécurisation.

La mémoire 4 est configurée pour stocker des instructions d'un code binaire 30 d'un programme devant être exécuté par le microprocesseur 2. La mémoire 4 est une mémoire à accès aléatoire. Typiquement, la mémoire 4 est une mémoire volatile. La mémoire 4 peut être une mémoire externe au microprocesseur 2 comme représenté sur la figure 1. Dans ce cas, la mémoire 4 est, par exemple, réalisée sur un substrat mécaniquement séparé du substrat sur lequel sont réalisés les différents éléments du microprocesseur 2 comme l'unité 10.

Dans cet exemple de réalisation le code binaire 30 comporte notamment le code machine 32 d'une fonction sécurisée.

A titre d'illustration, le microprocesseur 2 est conforme à l'architecture ARM (« Advanced Risk Machine ») version 7 et supporte les jeux d'instructions tels que Thumb1 et/ou Thumb2.

Le chargeur 18 charge dans la file 22 la prochaine instruction à exécuter par l'unité 10 à partir de la mémoire 4. Plus précisément, le chargeur 18 charge l'instruction sur laquelle pointe le compteur ordinal 26. Le chargeur 18 charge dans la file 22 systématiquement et à chaque fois un mot complet de N bits, où N est un entier constant généralement supérieur ou égale à 8, 16, 32 ou 64. N est donc la taille de chargement utilisée par le microprocesseur 2. Par exemple, ici, N est égal à 32.

L'unité 10 est notamment configurée pour exécuter les unes après les autres les instructions chargées dans la file 22. Les instructions chargées dans la file 22 sont généralement systématiquement exécutées dans l'ordre où ces instructions ont été enregistrées dans cette file 22. L'unité 10 est aussi capable d'enregistrer le résultat de ces instructions exécutées dans un ou plusieurs des registres de l'ensemble 12.

Dans cette description, on utilisera comme synonymes « exécution par le microprocesseur 2 » et « exécution par l'unité 10 ».

Le module 14 est configuré pour déplacer des données entre l'ensemble 12 de registres et l'interface 16. L'interface 16 est notamment apte à acquérir des données et des instructions, par exemple depuis la mémoire 4 et/ou le support 6 extérieurs au microprocesseur 2.

Le module 28 est capable d'exécuter automatiquement les opérations suivantes à la place de l'unité arithmétique et logique 10 :

1) en réponse au chargement, par le chargeur 18, d'une instruction à protéger du bloc de base en cours d'exécution, le module 28 construit une valeur Ck d'une signature de ce bloc de base,

2) en réponse au chargement, par le chargeur 18, d'une instruction de branchement :

- le module 28 compare la valeur construite Ck à une valeur attendue $\Gamma_k$ pour la signature de ce bloc de base et seulement si ces valeurs ne sont pas identiques, déclenche le signalement d'une faute d'exécution, et
- le module 28 initialise la construction d'une valeur $C_{k+1}$ d'une signature du bloc de base suivant.

Pour réaliser l'opération 1) ci-dessus, le module 28 implémente et exécute une fonction pré-programmée $F_{CS}(i_i, C_k)$ et pour réaliser l'opération 2) ci-dessus le module 28 implémente et exécute une fonction pré-programmée $F_{VS}(v, IV_k)$. Ces fonctions sont des fonctions secrètes. A cet effet, il n'existe pas de code machine pour exécuter ces fonctions dans une mémoire située en dehors du microprocesseur 2. Typiquement, elles sont implémentées sous forme matérielle à l'intérieur du module 28 ou leur code est enregistré dans une mémoire non-volatile sécurisée 29 à l'intérieur du microprocesseur 2.

Dans ce mode de réalisation, le module 28 construit la valeur de la signature d'un bloc de base au fur et à mesure que des instructions à protéger de ce bloc de base sont chargées dans la file 22. Plus précisément, à chaque fois qu'une instruction $i_i$ à protéger du bloc de base est chargée dans la file 22, le module 28 construit la nouvelle valeur $C_k$ de la signature du bloc de base en exécutant l'opération suivante : $C_k := F_{CS}(i_i, C_k)$, où les valeurs $C_k$ à gauche et à droite du signe égale sont, respectivement, la nouvelle valeur et l'ancienne valeur de la signature du bloc de base. Puisque la valeur Ck est construite de façon itérative à partir de sa précédente valeur, il est nécessaire d'initialiser la première valeur Ck à utiliser. Cette première valeur est par la suite appelée « vecteur d'initialisation » est notée IVk.

Par exemple, ici, la fonction $F_{CS}(i_i, C_k)$ est la fonction suivante $F_{k1}(|i_i| \text{ XOR } C_k)$, où :

- $|i_i|$ est la valeur numérique de l'instruction $i_i$ chargée,
- XOR est l'opération « OU exclusif »,
- Ck est la valeur actuelle de la signature en cours de construction,
- $F_{k1}()$ est une fonction de chiffrement symétrique du nombre contenu entre parenthèses avec une clé secrète k1.

La valeur numérique $|i_i|$ est obtenue, par exemple, à l'aide de la relation suivante : $|i_i| = F_{vi}(i_i)$, où $F_{vi}$ est une fonction bijective qui à partir de la suite de « 0 » et de « 1 » qui code l'instruction $i_i$, retourne une valeur numérique. Dans ce mode de réalisation, pour simplifier, la fonction $F_{vi}()$ est la fonction identité.

La clé k1 est enregistrée dans la mémoire sécurisée 29 du microprocesseur 2. Ici, il s'agit d'une mémoire qui peut être lue et/ou écrite uniquement par le module 28. Aucun accès à cette mémoire 29 sans passer par l'intermédiaire du module 28 n'est prévu.

La fonction Fvs(v, IVk) est une fonction qui retourne, lorsqu'elle est exécutée par le module 28, une valeur attendue $\Gamma_{k-1}$ pour la signature d'un bloc de base précédent $BB_{k-1}$, à partir de la valeur d'un paramètre v et d'un vecteur d'initialisation IVk présent au début d'un bloc de base suivant BBk. La fonction $F_{VS}(v, IV_k)$ est telle que, connaissant la valeur $\Gamma_{k-1}$ attendue pour la signature du bloc $BB_{k-1}$ et le vecteur d'initialisation $IV_k$, il est possible de déterminer la valeur du paramètre v qui satisfait la relation suivante : $\Gamma_{k-1} = F_{VS}(v, IV_k)$. A titre d'illustration, ici, la fonction $F_{VS}(v, IV_k)$ est la fonction suivante $F_{k1}(v \text{ XOR } IV_k)$, où les symboles utilisés ont déjà été définis ci-dessus. Ainsi, dans cet exemple, les fonctions $F_{CS}(i_i, C_k)$ et $F_{VS}(v, IV_k)$ sont les mêmes et seuls leurs arguments changent. Dans ce cas particulier, la valeur du paramètre v qui permet de satisfaire la relation $\Gamma_{k-1} = F_{VS}(v, IVk)$ est donnée par la relation suivante : $v := F_{k1}^{-1}(\Gamma_{k-1}) \text{ XOR } IV_k$, où $F_{k1}^{-1}()$ est la fonction inverse de la fonction $F_{k1}()$, c'est-à-dire ici la fonction de déchiffrement.

Dans cet exemple de réalisation, l'ensemble 12 comporte des registres généraux utilisables pour stocker tout type de données et des registres dédiés. Contrairement aux registres généraux, les registres dédiés sont dédiés au stockage de données particulières généralement automatiquement générées par le microprocesseur 2.

Le microprocesseur 2 comporte ici un bus d'échange de données 24 qui relie les différents composants du microprocesseur 2 entre eux.

Le support 6 est typiquement une mémoire non volatile. Par exemple, il s'agit d'une mémoire du type EEPROM ou Flash. Il contient ici une copie 40 de sauvegarde du code binaire 30. Typiquement, c'est cette copie 40 qui est automatiquement recopiée dans la mémoire 4 pour restaurer le code 30, par exemple, après une coupure de courant ou similaire ou juste avant que débute l'exécution du code 30.

Le code machine 32 se compose d'une succession de blocs de base qui doivent être exécutés les uns après les autres.

La figure 2 représente un premier agencement de deux blocs de base 50 et 52 du code machine 32. Dans ce premier agencement, les blocs de base 50 et 52 sont systématiquement exécutés l'un après l'autre. Dans l'ordre d'exécution, le bloc de base 50 précède le bloc de base 52. Dans cette figure et les figures suivantes :

- l'ordre d'exécution des blocs de base est représenté par une flèche qui pointe du bloc de base précédent vers le bloc de base suivant,
- une flèche en pointillés qui pointe sur un bloc de base représenté indique que le ou les blocs de base qui précèdent ce bloc de base n'ont pas été représentés pour simplifier la figure,

- une flèche en pointillés qui pointe dans le vide depuis un bloc de base représenté indique que le ou les blocs de base suivant ce bloc de base représenté n'ont pas été représentés pour simplifier la figure.

Chaque bloc de base débute par une adresse de branchement et se termine par une instruction de branchement. Sur la figure 2, les symboles « @1 » et « @2 » à côté de la première instruction de chaque bloc de base désignent les adresses de branchement, respectivement, des blocs de base 50 et 52. Le symbole « @3 » désigne l'adresse de branchement d'un autre bloc de base non représenté sur la figure 2.

L'instruction « Branch » suivie d'une adresse de branchement telle que @2 ou @3 est une instruction de branchement inconditionnel vers cette adresse de branchement.

Les premières instructions « $IV_1$ » et « $IV_2$ », respectivement, des blocs 50 et 52 sont les vecteurs d'initialisation utilisés pour initialiser la construction des valeurs $C_1$ et $C_2$ des signatures, respectivement, des blocs 50 et 52 à l'aide de la fonction $F_{CS}(i_i, C_k)$. Ces vecteurs d'initialisation sont codés sur N bits, c'est-à-dire sur le même nombre de bits qu'une instruction. Toutefois, contrairement à une instruction, leur valeur peut être quelconque. En particulier, leur valeur n'a pas à correspondre à celle d'une instruction du jeu d'instructions du microprocesseur 2. Ces vecteurs d'initialisation sont des constantes choisies lors de la génération du code machine 32. Une valeur constante est une valeur qui ne peut pas être modifiée lors de l'exécution du code machine 32 sauf accidentellement comme, par exemple, en cas d'injection de fautes.

Dans les figures et dans la description, le symbole $IV_k$ est utilisé pour désigner de façon générale le vecteur d'initialisation d'un bloc de base $BB_k$, où l'indice k est un numéro d'ordre qui identifie sans ambiguïté ce bloc de base parmi l'ensemble des blocs de base de la fonction 32. De plus, dans les cas simples comme celui représenté sur la figure 2 où deux blocs de base se suivent dans l'ordre d'exécution de la fonction 32, l'indice k est aussi utilisé pour indiquer l'ordre dans lequel ces blocs de base sont exécutés. Par exemple, la notation $BB_{k-1}$ est, dans ces cas simples, utilisée pour désigner le bloc de base qui est systématiquement exécuté immédiatement avant le bloc de base $BB_k$.

Ici, le vecteur d'initialisation de chaque bloc de base est choisi de manière à ce que la valeur attendue de la signature de ce bloc de base soit unique pour chaque bloc de base du code machine 32. Par « unique pour chaque bloc de base », on désigne le fait que la probabilité que deux blocs de base du code machine 32 aient la même valeur attendue pour leur signature respective est inférieure à 1 chance sur 100 ou sur 1000. En pratique, la probabilité que deux blocs de base aient la même valeur attendue est généralement beaucoup plus petite. Par exemple, de préférence, cette probabilité est inférieure à $N_{va}/2^{c-1}$ ou $N_{va}/2^c$, où $N_{Va}$ est le nombre de valeurs attendues utilisées dans le code machine, « c » est le nombre de bits utilisés pour coder la valeur maximale des vecteurs d'initialisation en binaire. En particulier, l'expression « unique pour chaque bloc de base » couvre donc le cas où les valeurs attendues des signatures de tous les blocs de base sont systématiquement différentes les unes des autres. Ici, « c » est égal à N. Par exemple, dans une mode réalisation simple, lors de la génération du code 32, les vecteurs d'initialisation de chaque bloc de base sont tirées de façon aléatoire ou pseudo-aléatoire dans l'ensemble $\{1 ; ...; 2^N\}$.

Dans ce mode de réalisation, chaque bloc de base comporte une instruction spécifique désignée dans les figures et dans ce texte par le symbole « Update(v) ». Pour simplifier les figures, cette instruction spécifique est uniquement représentée dans la figure 2 dans le cas du bloc 50. L'instruction « Update(v) » est une instruction du jeu d'instructions du microprocesseur 2. Lorsqu'elle est exécutée par le microprocesseur 2 elle provoque le remplacement de la valeur actuelle du paramètre v par une nouvelle valeur. De préférence, la valeur du paramètre v est enregistrée dans la mémoire 29. Ici, la nouvelle valeur est directement contenue dans le code machine à l'intérieur du bloc de base. Comme le vecteur d'initialisation, cette nouvelle valeur est une constante choisie lors de la génération du code machine. Plus précisément, lors de la génération du code 32, la valeur du paramètre v est choisie pour vérifier la relation suivante :
$\Gamma_{k-1} = F_{VS}(v, IVk)$

Chaque bloc de base comporte au moins une instruction à protéger. Sur la figure 2 et dans ce texte, chaque instruction à protéger est désignée par le symbole $i_i$ où l'indice i désigne le numéro d'ordre de l'instruction à protéger à l'intérieur du bloc de base. L'instruction $i_i$ peut être n'importe quelle instruction valable du jeu d'instructions du microprocesseur 2.

Dans ce mode de réalisation, toutes les instructions de tous les blocs de base du code machine 32 sont considérées comme étant des instructions à protéger. Pour simplifier les figures, la présence de ces autres instructions à protéger dans chaque bloc de base est représentée par le symbole « ... ». En particulier, dans ce mode de réalisation, l'instruction « Udpate(v) » et l'instruction de branchement située à la fin du bloc de base sont aussi des instructions à protéger.

La figure 3 représente un autre agencement possible de plusieurs blocs de base du code 32. Cet agencement est utilisé pour montrer l'intérêt du paramètre v. Ceci est ici illustré dans le cas particulier de deux blocs de base précédents 60 et 62 et d'un bloc de base suivant 64. Ici, les blocs 60 et 64 sont, par exemple, identiques, respectivement, aux blocs 50 et 52. Le bloc 62 est construit comme décrit plus en détail pour le bloc 50 mais la valeur attendue $\Gamma_{62}$ de sa signature est différente de la valeur attendue $\Gamma_{60}$ pour la signature du bloc 60. Dans le cas d'un tel agencement et si le paramètre v n'était pas utilisé, alors il faudrait que les valeurs atten-

dues $\Gamma_{60}$ et $\Gamma_{62}$ vérifient la relation suivante : $\Gamma_{60} = \Gamma_{62} = F_{VS}(IV_2)$, où $IV_2$ est le vecteur d'initialisation du bloc 64. Une telle égalité entre les valeurs attendues $\Gamma_{60}$ et $\Gamma_{62}$ ne peut généralement être obtenue qu'en choisissant de façon appropriée les vecteurs d'initialisation $IV_1$ et $IV_3$. Grâce à l'utilisation du paramètre v dont la valeur est mise à jour lors de l'exécution des blocs 60 et 62, les valeurs attendues $\Gamma_{60}$ et $\Gamma_{62}$ peuvent être différentes tout en restant capable de construire la valeur attendue correcte à partir du même vecteur d'initialisation $IV_2$. Ainsi, l'utilisation du paramètre v relâche les contraintes imposées sur le choix des vecteurs d'initialisation $IV_1$ et $IV_3$. Cela simplifie donc la génération du code 32.

La figure 4 représente un procédé d'exécution du code binaire 30 par le microprocesseur 2.

Le procédé débute par une étape 150 de fourniture du code binaire 30 dans la mémoire 4. Pour cela, par exemple, le microprocesseur 2 recopie la copie 40 à l'intérieur de la mémoire 4 pour obtenir le code binaire 30 enregistré dans la mémoire 4.

Ensuite, lors d'une phase 152, le microprocesseur 2 exécute le code binaire 30 et, en particulier, le code machine 32.

Pour cela, lors d'une étape 154, le chargeur 18 charge les instructions à exécuter les unes après les autres dans la file 22.

Ensuite, si l'instruction chargée ne suit pas immédiatement une instruction de branchement, alors, lors d'une étape 156, cette instruction est décodée puis l'unité 10 l'exécute. Dès lors, lorsqu'une instruction « Update(v) » est chargée, celle-ci est exécutée et la valeur actuelle de paramètre v dans la mémoire 29 est remplacée par une nouvelle valeur.

En parallèle de l'étape 156, lors d'une étape 157, à chaque fois qu'une instruction à protéger est chargée dans la file 22, le module 28 construit la nouvelle valeur Ck de la signature du bloc de base en cours d'exécution. Pour cela, il met en œuvre la relation $Ck := F_{CS}(i_i, C_k)$, c'est-à-dire dans le cas particulier décrit ici, la relation $C_k := F_{k1}(|i_i| \text{ XOR } C_k)$, où les différents symboles ont été définis précédemment. Ainsi, la valeur Ck de la signature du bloc BBk se construit au fur et à mesure que les instructions de ce bloc de base sont exécutées par le microprocesseur 2. Typiquement, l'étape 157 est exécutée avant que l'instruction chargée soit exécutée par l'unité 10. Par exemple, elle est exécutée avant que l'instruction chargée soit décodée.

Lorsque l'instruction chargée est l'instruction de branchement qui délimite la fin du bloc de base précédent, alors en réponse :

-    lors d'une étape 158, le module 28 vérifie l'intégrité du bloc de base précédent, puis,
-    lors d'une étape 160, le module 28 initialise la construction de la signature du bloc de base suivant.

Par la suite, on note $BB_{k-1}$ et $BB_k$, respectivement, le bloc de base précédent et le bloc de base suivant.

L'étape 158 débute par une opération 162 lors de laquelle le microprocesseur 2 charge le vecteur d'initialisation $IV_k$ qui se trouve à l'adresse de branchement du bloc $BB_k$ comme s'il s'agissait d'une instruction à exécuter par l'unité 10. Toutefois, après l'exécution d'une instruction de branchement, l'instruction chargée est transmise au module 28 et non pas à l'unité 10.

En réponse, lors d'une opération 164, le module 28 calcule la valeur attendue $\Gamma_{k-1}$ à l'aide de la relation suivante : $r_{k-1} := F_{VS}(v, IV_k)$, c'est-à-dire ici à l'aide de la relation $\Gamma_{k-1} := F_{k1}(v \text{ XOR } IV_k)$, où « v » est la valeur actuelle du paramètre v chargée lors de l'exécution de l'instruction « Update(v) » contenue dans le bloc $BB_{k-1}$.

Ensuite, lors d'une opération 166, le module 28 compare la valeur construite $C_{k-1}$ de la signature du bloc $BB_{k-1}$ à la valeur attendue $\Gamma_{k-1}$ calculée pour ce même bloc. Si ces valeurs correspondent, c'est-à-dire ici si elles sont identiques, alors l'intégrité du bloc $BB_{k-1}$ est confirmée. De plus, étant donné que pour calculer la valeur attendue $F_{k-1}$, la valeur du vecteur $IV_k$ contenue dans le bloc $BB_k$ est utilisée, la valeur $\Gamma_{k-1}$ calculée ne peut correspondre à la valeur $C_{k-1}$ que si l'intégrité du flot de contrôle n'a pas été altérée. Par conséquent, lors de l'opération 166, le module vérifie, en même temps et en seule opération de comparaison, l'intégrité du flot de contrôle et l'intégrité du bloc $BB_{k-1}$.

Si l'intégrité du bloc $BB_{k-1}$ et l'intégrité du flot de contrôle sont confirmées, l'étape 158 s'achève et le procédé se poursuit par l'exécution de l'étape 160. Dans le cas contraire, le procédé se poursuit par une étape 170 de signalement, par le microprocesseur 2, d'une faute d'exécution.

Lors de l'étape 160, le module 28 initialise la construction de la valeur Ck de la signature du bloc $BB_k$ avec le vecteur $IV_k$. Autrement ici, le module 28 réalise l'opération suivante : $Ck := IVk$.

Lors de l'exécution du code machine 32, si des attaques conduisent à altérer une instruction à protéger ou à modifier le flot de contrôle, le microprocesseur 2 signale, lors de l'étape 170, une faute dans l'exécution du code machine 32. En réponse à un tel signalement, lors d'une étape 172, par exemple, le microprocesseur 2 met en œuvre une ou plusieurs contre-mesures. De très nombreuses contre-mesures sont possibles. Les contre-mesures mises en œuvre peuvent avoir des degrés de sévérité très différents. Par exemple, les contre-mesures mises en œuvre peuvent aller d'un simple affichage d'un message d'erreur sans interrompre l'exécution normale du code machine 32 jusqu'à une mise hors service définitive du microprocesseur 2. Le microprocesseur 2 est considéré comme étant hors service lorsqu'il est définitivement placé dans un état où il est incapable d'exécuter un quelconque code machine. Entre ces degrés de sévérité extrêmes, il existe de nombreuses autres contre-mesures possibles telles que :

-    l'indication par l'intermédiaire d'une interface homme-machine de la détection des fautes,

- l'interruption immédiate de l'exécution du code machine 32 et/ou sa réinitialisation, et
- la suppression du code machine 32 de la mémoire 4 et/ou la suppression de la copie 40 de sauvegarde et/ou la suppression des données secrètes.

La figure 5 représente un compilateur 190 apte à générer automatiquement le code machine 32 à partir d'un code source 192. À cet effet, le compilateur 190 comporte typiquement un microprocesseur 194 programmable et une mémoire 196. La mémoire 196 contient les instructions et les données nécessaires pour, lorsqu'elles sont exécutées par le microprocesseur 194, générer automatiquement le code machine 32 à partir d'un code source 192. En particulier, lors de la compilation du code source 192, le microprocesseur 194 introduit automatiquement les instructions « Update(v) » et les vecteurs d'initialisation IVk appropriés dans le code machine 32. La conception et la réalisation d'un tel compilateur sont à la portée de l'homme du métier à partir des explications données dans cette description.

Variantes du code binaire :

Il est possible de garantir l'unicité de la valeur attendue $\Gamma_k$ pour chaque bloc de base par d'autres moyens qu'un simple tirage aléatoire. Par exemple, lors de la génération du code machine, la valeur attendue de la signature de chaque bloc de base est établie en fonction des valeurs attendues déjà utilisées pour d'autres blocs de base. Pour cela, à titre d'illustration, lors de la génération du code machine les opérations suivantes sont exécutées dans l'ordre :

a) La valeur attendue pour le bloc de base actuellement traité est d'abord construite en tirant aléatoirement le vecteur d'initialisation.
b) La valeur attendue de la signature du bloc de base actuellement traité est calculée puis comparée aux valeurs attendues construites et mémorisées pour les blocs de base déjà traités.
c) Si la valeur attendue du bloc de base actuellement traité est égale à l'une des valeurs attendues déjà construites et mémorisées, les opérations a) à c) sont réitérées. Dans le cas contraire, la valeur attendue construite pour ce bloc de base actuellement traité est mémorisée.

La réitération des opérations a) à c) conduit à tirer de façon aléatoire un nouveau vecteur d'initialisation pour le bloc de base traité. Plutôt que de tirer aléatoirement un nouveau vecteur d'initialisation, il est aussi possible de modifier la valeur du paramètre v ou de modifier certaines instructions de ce bloc de base sans en modifier le fonctionnement. Par exemple, il est possible de changer les registres utilisés, ou d'introduire une opération qui ne fait rien lorsqu'elle est exécutée, ou de réexprimer une séquence d'instructions en une nouvelle séquence d'instructions différente mais sémantiquement équivalente, c'est-à-dire produisant le même résultat.

Dans une variante simplifiée, le vecteur d'initialisation a la même valeur et cela quel que soit le bloc de base à l'intérieur duquel elle se situe. Il suffit alors que les blocs de base ne comportent pas toujours les mêmes instructions à protéger pour que les valeurs attendues des signatures de différents blocs de base soient différentes. Dès lors, cela permet toujours de détecter un grand nombre de fautes d'exécution.

Variantes de l'appareil :

La mémoire 4 peut aussi être une mémoire non volatile. Dans ce cas, il n'est pas nécessaire de copier le code binaire 30 à l'intérieur de cette mémoire avant le lancement de son exécution puisqu'il s'y trouve déjà.

En variante, la mémoire 4 peut aussi être une mémoire interne intégrée à l'intérieur du microprocesseur 2. Dans ce dernier cas, elle est réalisée sur le même substrat que les autres éléments du microprocesseur 2. Enfin, dans d'autres configurations, la mémoire 4 se compose de plusieurs mémoires dont certaines sont des mémoires internes et d'autres des mémoires externes.

Variantes de construction de la signature :

En variante, seules certaines instructions de chaque bloc de base sont des instructions à protéger. Dans ce cas, la valeur Ck de la signature est construite sans prendre en compte toutes les valeurs de toutes les instructions du bloc de base mais seulement certaines de ces instructions. Ainsi, selon une première alternative, la valeur $C_k$ est construite en prenant en compte uniquement les instructions dont le numéro d'ordre, dans le bloc de base BBk, est pair.

Selon une deuxième alternative, seules les instructions du bloc de base BBk dont l'opcode comporte un bit ou un groupe de bits ayant une valeur spécifique sont utilisées pour construire la valeur $C_k$ de la signature de ce bloc. Les autres instructions de ce bloc, pour lesquels le bit ou le groupe de bits de l'opcode a une valeur différente de cette valeur spécifique, ne sont pas prises en compte pour la construction de la valeur Ck. Par exemple, le jeu d'instruction du microprocesseur est modifié pour y ajouter un bit supplémentaire qui, lorsqu'il prend la valeur « 1 », indique que cette instruction est une instruction à protéger qui doit être prise en compte pour la construction de la valeur Ck. À l'inverse, si ce bit supplémentaire prend la valeur « 0 », cette instruction n'est pas une instruction à protéger et ne doit donc pas être prise en compte pour la construction de la valeur Ck de la signature.

Selon une troisième alternative, une instruction spécifique est ajoutée au jeu d'instructions du microprocesseur 2. Lorsque cette instruction spécifique est exécutée par ce microprocesseur, elle indique au microprocesseur que les M prochaines instructions du bloc de base ne sont pas des instructions à protéger et ne doivent donc pas être prises en compte pour la construction de la valeur Ck de la signature. Typiquement, M est un nombre entier supérieur ou égal à 1.

Selon une quatrième alternative, c'est un bit spécifique d'un registre de statut ou de contrôle du microprocesseur qui indique si l'instruction chargée est ou non une instruction à protéger. Plus précisément, lorsque ce bit spécifique prend une valeur prédéterminée, l'instruction chargée est prise en compte pour la construction de la valeur $C_k$ de la signature. Si ce bit spécifique prend une valeur différente de cette valeur prédéterminée, alors l'instruction chargée n'est pas prise en compte pour la construction de la valeur $C_k$ de la signature.

D'autres fonctions $F_{cs}()$ peuvent être utilisées. En particulier, la fonction $F_{cs}()$ n'est pas nécessairement une fonction de chiffrement mettant en œuvre une clé k1 secrète. Ainsi, dans un autre mode de réalisation, la fonction $F_{cs}()$ est une simple opération logique ou modulaire entre les valeurs $|i_i|$ et Ck. Par exemple, dans un mode de réalisation particulièrement simple, la fonction $F_{cs}()$ est une simple opération « OU exclusif ». La valeur Ck est alors construite en utilisant la relation suivante : $C_k :=|i_i|$ XOR $C_k$.

Dans un autre exemple de réalisation intéressant, la fonction $F_{cs}()$ est un homomorphisme entre deux ensembles algébriques A et B. L'ensemble A est doté d'une opération notée « + » et l'ensemble B est doté d'une opération notée « * ». Cet homomorphisme est tel que $F_{CS}(x+y) = F_{CS}(x)*F_{CS}(y)$, où x et y sont des nombres appartenant à l'ensemble A. De plus, cette fonction homomorphe $F_{CS}$ est injective et les opérations « + » et « * » sont des opérations commutatives et inversibles. Lorsque la fonction $F_{cs}()$ est un homomorphisme, la valeur $C_{k-1}$ de la signature est par exemple construite de la façon suivante :

$$C_{0, k-1} := F_{CS}(IV_{k-1}),$$

$$C_{1, k-1} := F_{CS}(|I_0|) * C_{0, k-1},$$

$$C_{2, k-1} := F_{CS}(|i_1|) * C_{1, k-1},$$

$C_{n, k-1} F_{CS}(|i_n|) * C_{n-1, k-1}$ , où :

- $C_{j, k-1}$ désigne la valeur $C_{k-1}$ au cours de la j-ième itération de l'opération de construction de la valeur $C_{k-1}$,
- $C_{k-1}$ est égal à $C_{n, k-1}$.

À cause du fait que la fonction $F_{cs}()$ est un homomorphisme, la valeur $C_{k-1}$ construite peut aussi s'écrire sous la forme suivante : $C_{k-1} := F_{CS}(IV_{k-1} + |i_0| + |i_1| + ... + |i_n|)$. Par ailleurs, la fonction $F_{vs}()$ est identique

à la fonction $F_{cs}()$ et le calcul de la valeur $\Gamma_{k-1}$ est réalisé à l'aide de la relation suivante : $\Gamma_{k-1} = F_{CS}(v + IV_k)$. Dès lors, la valeur du paramètre v peut être calculée de la façon suivante : $v := IV_{k-1} + |i_0| + |i_1| + ... |i_n| - IVk$, où le symbole « - » désigne l'inverse de l'opération « + ». Par conséquent, la valeur du paramètre v peut être déterminée sans qu'il soit nécessaire d'inverser la fonction $F_{CS}()$. De façon similaire, si la valeur du paramètre v est imposée, le vecteur d'initialisation est déterminé à l'aide de la relation suivante : $IVk := IV_{k-1} + |i_0| + |i_1| + ... |i_n| - v$. Autrement dit, lorsque la fonction $F_{cs}()$ est un homomorphisme, la fonction $F_{CS}$ n'a pas besoin d'être inversible. De plus, la même fonction $F_{cs}()$ est utilisée pour construire la valeur $C_{k-1}$ et pour calculer la valeur attendue $\Gamma_{k-1}$. Ce qui a été expliqué ici est valable pour n'importe quelles opérations « + » et « * » et n'est pas limité, par exemple, aux opérations d'addition et de multiplication. En particulier, ce mode de réalisation permet d'utiliser en tant que fonction $F_{cs}()$ des fonctions non inversibles telles que certaines fonctions de hachage (« hash function » en anglais) ou certaines fonctions de chiffrement asymétrique pour lesquelles seule la clé publique ou seule la clé privée est connue. À titre d'illustration, les fonctions qui suivent sont des homomorphismes qui conviennent pour réaliser la fonction $F_{cs}()$ :

- la fonction exponentielle « e » car $e^{x+y} = e^x * e^y$, où « + » et « * » sont, respectivement, les opérations d'addition et de multiplication,
- la fonction logarithme « log » car $\log(x * y) = \log(x) + \log(y)$, où « + » et « * » sont, respectivement, les opérations d'addition et de multiplication,
- la fonction « E » de chiffrement de Pallier car $E(x) * E(y) = E(x+y \mod(N))$, où « + » et « * » sont, respectivement, les opérations d'addition modulaire (modulo N) et de multiplication,
- la fonction « E » de chiffrement connu sous le terme « Unpadded RSA » avec une clé publique k exprimée avec un modulo m est une exponentiation « e » telle que $e(x) = x^e \mod m$, car $E(x) * E(y) = E(x*y)$, où « * » est l'opération de multiplication,
- la fonction « E » de chiffrement de Goldwasser-Micali car $E(x) * E(y) = E(x \text{ XOR } y)$, où « XOR » et « * » sont, respectivement, les opérations « ou exclusif » et la multiplication,
- les fonctions de chiffrement homomorphes.

Dans le cas où la fonction $F_{cs}()$ est un homomorphisme, avantageusement, le vecteur d'initialisation $IV_{k-1}$ enregistré au début du bloc $BB_{k-1}$ est remplacé par un vecteur d'initialisation $F_{CS}(IV_{k-1})$, c'est-à-dire par la valeur $C_{0,k-1}$. Dans ce cas, la construction de la valeur $C_{k-1}$ débute directement par l'opération $C_{1,k-1} := F_{CS}(|I_0|) * C_{0,k-1}$, et non plus par l'opération $C_{0,k-1} := F_{CS}(IV_{k-1})$. Cela limite donc le nombre d'opérations à réaliser pour construire la valeur $C_{k-1}$. De plus, lorsque la fonction $F_{cs}()$ est une fonction de chiffrement asymétrique, cela peut être utilisé pour garantir soit l'authenticité du code binaire exécuté soit pour garantir l'authenticité du module 28. Plus précisément, une première possibilité consiste à utiliser une clé publique kp pour construire la valeur $C_k$. Dans ce cas, la valeur $C_k$ est construite à l'aide de la relation suivante: $C_k := F_{kp}(i_i, C_k)$, où $F_{kp}()$ est la fonction de chiffrement asymétrique paramétrée avec la clé publique kp. Dans ce cas, le vecteur d'initialisation placé au début du bloc $BB_{k+1}$ est la valeur $C_{0,k+1}$, c'est-à-dire la valeur $F_{kp}(IV_{k+1})$. Pour calculer la valeur attendue $\Gamma_k$, le module 28 déchiffre la valeur $C_{0,k+1}$ à l'aide de la fonction de déchiffrement $D_{ks}()$ correspondant à la fonction $F_{kp}()$. La fonction $D_{ks}()$ est paramétrée par une clé secrète ks connue seulement du module 28. Le module 28 obtient ainsi le vecteur $IV_{k+1}$. Puis, le module calcule la valeur $\Gamma_k$, par exemple comme précédemment décrit, c'est-à-dire à l'aide de l'opération $\Gamma_k = F_{VS}(v, IV_{k+1})$. Par conséquent, la vérification de l'intégrité du code machine ne peut être réalisée que par un module 28 muni de la clé ks alors que le code machine peut être généré par tout compilateur ayant accès à la clé publique kp. A l'inverse, la valeur $C_k$ peut être construite à l'aide de la relation suivante : $Ck := D_{ks}(i_i, C_k)$. Dans ce cas, le vecteur d'initialisation placé au début du bloc $BB_{k+1}$ est la valeur $C_{0,k+1}$ égale à $D_{ks}(IV_{k+1})$. Pour calculer la valeur attendue $\Gamma_k$, le module 28 chiffre avec la clé publique kp la valeur $C_{0,k+1}$. Il obtient ainsi la valeur du vecteur $IV_{k+1}$. Puis, le module 28 calcule la valeur $\Gamma_k$ à l'aide de l'opération $\Gamma_k = F_{VS}(v, IV_{k+1})$. Par conséquent, dans ce dernier mode de réalisation, la vérification de l'intégrité du code machine peut être réalisée par tout module 28 muni de la clé kp alors que le code machine peut être généré uniquement par un compilateur muni de la clé privée ks.

Dans une autre variante la fonction $F_{vi}()$ est une fonction bijective différente de l'identité qui à chaque code d'une instruction en langage machine associe une valeur numérique respective. Par exemple, choisir une fonction $F_{vi}()$ différente de l'identité peut avoir un intérêt lorsque les instructions du jeu d'instructions ont des tailles différentes. Dans ce cas, une fonction $F_{vi}()$, différente de l'identité, est utilisée pour associer à chaque instruction de ce jeu d'instruction, une valeur numérique choisie dans un ensemble où toutes les valeurs numériques ont la même taille.

Variantes de la fonction $F_{VS}()$ :

En variante, la fonction $F_{vs}()$ est différente de la fonction $F_{CS}()$. Par exemple, dans une variante simplifiée, la fonction $F_{vs}()$ est la fonction identité. Dans ce cas, le vecteur d'initialisation IVk situé au début du bloc BBk est égal à la valeur attendue $\Gamma_{k-1}$ du bloc $BB_{k-1}$. De plus, lorsque ce vecteur d'initialisation $IV_k$ est utilisé pour initialiser la construction de la signature du bloc BBk, en absence de faute d'exécution, cela revient à initialiser la construction de la valeur $C_k$ avec la valeur $C_{k-1}$. Ainsi, la construction de la valeur de la signature n'est pas réinitialisée après l'exécution d'une instruction de branchement.

Dans tous les modes de réalisation décrits ici, la fonction $F_{VS}()$ peut être remplacée par une fonction $F_{VS}()$ qui n'a qu'un seul argument à savoir le vecteur d'initialisation $IV_k$. On a alors $\Gamma_{k-1} := F_{VS}(IV_k)$. Dans ce cas, pour relâcher les contraintes sur le choix des vecteurs d'initialisation $IV_k$, la valeur $C_{k-1}$ est construite à partir des valeurs des instructions à protéger du bloc $BB_{k-1}$ et à partir du paramètre v. Par exemple, la valeur $C_{k-1}$ est construite comme décrit précédemment sauf qu'on ajoute l'opération supplémentaire suivante: $C_{k-1} := F_{CS}(C_{k-1}, v)$. L'exécution de cette opération supplémentaire est par exemple déclenchée lorsque l'instruction de branchement du bloc $BB_{k-1}$ est chargée par le microprocesseur 2. Dans ce mode de réalisation, la fonction $F_{VS}()$ peut être la fonction identité.

Le paramètre v peut être omis. Par exemple, c'est le cas si chaque bloc de base a au plus un seul prédécesseur et un seul bloc de base suivant.

Une autre possibilité pour ne pas utiliser le paramètre v tout en relâchant les contraintes sur le choix des vecteurs d'initialisation consiste, lors de l'opération 166, à comparer la valeur $C_{k-1}$ aux différentes valeurs attendues possibles pour les blocs de base précédents. Par exemple, dans le cas de l'agencement de la figure 3, après l'exécution de l'instruction de branchement vers le bloc 64, lors de l'opération 166, le module 28 compare successivement la valeur $C_{k-1}$ à la valeur attendue $\Gamma_{60}$ de la signature du bloc 60 puis à la valeur attendue $\Gamma_{62}$ de la signature du bloc 62. Si la valeur $C_{k-1}$ construite ne correspond à aucune des valeurs $\Gamma_{60}$ et $\Gamma_{62}$, l'étape 170 est exécutée. Si, au contraire, la valeur $C_{k-1}$ est égale à l'une des valeurs $\Gamma_{60}$ et $\Gamma_{62}$, alors l'étape 160 est exécutée. Lors de l'opération 164, le module 28 calcule les valeurs $\Gamma_{60}$ et $\Gamma_{62}$ à partir, respectivement, de vecteurs d'initialisation $IV_{21}$ et $IV_{22}$ situés tous les deux au début du bloc 64. Par exemple, le vecteur d'initialisation $IV_{21}$ est enregistré à l'adresse @2 et le vecteur d'initialisation $IV_{22}$ est enregistré à l'adresse immédiatement suivante. Dans ce cas, le nombre $N_{iv}$ de lignes consacrées au stockage du ou des vecteurs d'initialisation au début de chaque bloc de base est constant. Ainsi, le microprocesseur peut déterminer simplement où débutent les instructions à exécuter dans chacun des blocs de base. Alternativement, le nombre $N_{iv}$ peut aussi être un paramètre réglable du fonctionnement du microprocesseur.

En variante, la construction de la valeur Ck est initialisée non pas directement avec le vecteur IVk mais avec une valeur g(IVk) où g est une fonction prédéterminée connue du module 28 et différente de la fonction identité. Par exemple, la fonction g peut être un « ou exclusif » entre le vecteur d'initialisation IVk et une constante connue seulement du module 28 et enregistrée dans la mémoire 29.

Variantes de l'instruction « Update(v) » :

L'instruction « Update(v) » peut être remplacée par une instruction « Update(reg) », où « reg » est l'adresse d'un registre. Lorsque le microprocesseur exécute l'instruction « Update(reg) », il remplace la valeur actuelle du paramètre v par la valeur contenue dans le registre situé à l'adresse « reg ».

L'instruction « Update(v) » peut aussi être remplacée par une instruction Update(@$_{off}$) où @$_{off}$ est une valeur d'offset par rapport à une adresse fixe prédéterminée @$_{init}$. Lorsque le microprocesseur 2 exécute l'instruction « Update(@$_{off}$) », il remplace la valeur actuelle du paramètre v par la valeur contenue dans un mot machine situé à l'adresse @$_{init}$ + @$_{off}$.

L'instruction « Update(v) » peut aussi être remplacée par deux instructions « Update(v$_{low}$) » et « Update(v$_{high}$) ». Lorsque le microprocesseur exécute l'instruction « Update(v$_{low}$) », il remplace les bits de poids faible de la valeur actuelle du paramètre v par la valeur v$_{low}$. Lorsque le microprocesseur exécute l'instruction « Update(v$_{high}$) », il remplace les bits de poids fort de la valeur actuelle du paramètre v par la valeur V$_{high}$.

Ces différents modes de réalisation de l'instruction « Update(v) » sont en particulier utiles si la valeur du paramètre v est codée sur le même nombre de bits que les instructions du microprocesseur. Dans ce cas, il n'est pas possible de coder directement la nouvelle valeur du paramètre v dans cette instruction.

Dans une autre variante, la valeur du paramètre v n'est pas directement contenue à l'intérieur du bloc de base mais déduite d'une valeur v* contenue dans ce bloc de base. Par exemple, la valeur v* est un cryptogramme de la valeur du paramètre v obtenu en chiffrant cette valeur du paramètre v à l'aide d'une fonction de chiffrement, par exemple symétrique. Dans un mode de réalisation simplifié, la valeur v* est égale à F$_{k1}$(v). Dans ce cas, lorsque l'instruction « Update(v) » est chargée, la valeur v* est transmise au module 28 qui la déchiffre à l'aide de la clef k1 et de la fonction F$_{k1}^{-1}$ pour obtenir la nouvelle valeur du paramètre v. Ensuite, cette nouvelle valeur du paramètre v est stockée dans la mémoire 29 à la place de la précédente.

Un bloc de base précédent peut se terminer par une instruction de branchement conditionnelle vers un premier bloc de base si la condition est vérifiée et, en alternance, vers un second bloc de base sinon. Dans ce cas les premier et second blocs de base suivants peuvent comporter à leurs adresses de branchement respectives le même vecteur d'initialisation. Ainsi, ce qui a été décrit ici s'applique sans aucune modification supplémentaire pour gérer ce type d'agencement des blocs de base du code 32. Alternativement, s'il est souhaitable que les vecteurs d'initialisation des premier et second blocs de base suivants soient différents, alors une instruction « Update(v$_1$) » et une instruction « Update(v$_2$) » sont introduites dans le bloc de base précédent. Ces instructions sont alors paramétrées par une condition telle que l'instruction « Update(v$_1$) » est exécutée uniquement si le bloc de base suivant est le premier bloc de base et l'instruction « Update(v$_2$) » est exécutée uniquement si le bloc de base suivant est le second bloc de base suivant. Le choix des valeurs v$_1$ et v$_2$ du paramètre v est alors réalisé comme décrit précédemment de manière à vérifier la condition $\Gamma_{k-1} = F_{VS}(v_1, IV_1) = F_{VS}(v_2, IV_2)$ où IV$_1$ et IV$_2$ sont les vecteurs d'initialisation, respectivement, des premier et second blocs suivants. Ce mode de réalisation est utilisable avec les microprocesseurs capables d'exécuter des instructions de façon conditionnelle, c'est-à-dire uniquement si une condition paramétrable est satisfaite. Dans le cas contraire, le microprocesseur n'exécute pas cette instruction. De préférence, la condition testée est la même que celle testée par l'instruction de branchement conditionnelle. De plus, grâce à cela, il est possible de déclencher le signalement d'une faute d'exécution si le flot d'instructions est détourné vers le premier bloc de base alors que la condition n'est pas vérifiée.

Il existe encore d'autre alternative au mode de réalisation du paragraphe précédent. Par exemple, l'ensemble 12 peut contenir un registre dédié qui contient une valeur qui varie en fonction de la condition d'un branchement conditionnel. Plus précisément, sa valeur n'est pas la même selon que cette condition est vérifiée ou non. Ce registre dédié est souvent appelé « registre de statut ». Dans une architecture ARM, ce registre dédié est connu sous l'acronyme CPSR (« Current Program Statut Register »). Le CPSR contient notamment les bits suivants :

- le bit N qui prend la valeur « 1 » si le résultat de la condition est négatif et la valeur « 0 » sinon,
- le bit Z qui prend la valeur « 1 » si le résultat de la condition est nul et « 0 » sinon,
- le bit C qui prend la valeur « 1 » si le résultat de la condition a une retenue et sinon la valeur « 0 »,
- le bit V qui prend la valeur « 1 » si le résultat de la condition a débordé et sinon la valeur « 0 ».

Ici, la valeur de ces quatre bits N, Z, C et V est collectivement désignée par le terme « valeur NZCV ». Selon la condition à vérifier, seule une partie des bits de la valeur NZCV est utile et les valeurs des autres bits doivent être ignorées. Pour cela, la valeur d'un masque M identifiant la position des bits utiles est chargée dans un registre du microprocesseur 2 avant l'exécution de l'instruction de branchement conditionnelle. Le bloc de base précédent comporte donc à cet effet une instruction de chargement de ce masque M. Ce masque M, comme la valeur NZCV attendue, est déterminé lors de la génération du code machine. Ici, le masque M comporte quatre bits. Un bit du masque M prend la valeur « 1 » pour indiquer la position d'un bit utile dans la valeur NZCV. Dans ce cas, la valeur du paramètre v est calculée à l'aide de la relation suivante : $v := h(v_1, c, M)$, où :

- v$_1$ est une valeur chargée par une instruction « update(v$_1$) » contenue dans le bloc de base précédent,
- « c » est la valeur NZCV,

- « M » est la valeur du masque M.

Par exemple, la fonction $h(v_1, c, M)$ est la suivante : $h(v_1, c, M) = v_1$ XOR extend$(c \wedge M)$, où :

- le symbole « $\wedge$ » désigne l'opération « ET » logique, et
- extend(...) est une fonction qui renvoie un nombre codée sur N bits à partir du nombre $c \wedge M$ codé sur quatre bits.

Dans ce mode de réalisation, la valeur du paramètre v n'est donc pas la même si la condition de l'instruction du branchement conditionnelle est vérifiée ou non. Ainsi, selon que l'exécution du code machine se poursuit par l'exécution du premier ou du second bloc de base, la valeur du paramètre v n'est pas la même.

Variantes du déclenchement du contrôle d'intégrité :

Il n'est pas indispensable que le contrôle de l'intégrité du bloc de base précédent et du flot de contrôle soit déclenché systématiquement et immédiatement après l'exécution d'une instruction de branchement. Par exemple, en variante, la vérification de l'intégrité n'est pas déclenchée par une instruction de branchement mais par une instruction spécifique appelée ici « Verify ». Lorsque le microprocesseur rencontre dans le code machine l'instruction « Verify », il exécute alors les opérations suivantes :

> 1) Il lit la valeur de l'instruction qui suit immédiatement l'instruction « Verify ». Cette valeur lue est un vecteur d'initialisation qui a été construit lors de la génération du code machine pour vérifier, comme décrit précédemment, l'intégrité du bloc de base et l'intégrité du flot de contrôle.
> 2) Ensuite, le microprocesseur compare la valeur construite Ck de la signature à la valeur $\Gamma_k$ attendue calculée à partir de la valeur du paramètre v et du vecteur d'initialisation $IV_{k+1}$ comme précédemment décrit.
> 3) Ensuite, la valeur $C_{k+1}$ de la signature est initialisée à l'aide du vecteur $IV_{k+1}$ comme décrit précédemment.
> 4) Enfin, le compteur ordinal est incrémenté pour pointer sur l'instruction située immédiatement après le vecteur $IV_{k+1}$.

Une telle instruction « Verify » peut être placée à n'importe quel endroit à l'intérieur du bloc de base $BB_{k+1}$ et non pas seulement au début de ce bloc de base. Dès lors, la valeur construite de la signature peut être fonction des instructions à protéger présentes entre cette occurrence de l'instruction « Verify » et la précédente instruction « Verify » exécutée. Dans ce cas, la valeur Ck peut dépendre à la fois d'instructions à protéger contenues dans le bloc de base précédent et d'instructions à protéger également contenues dans le bloc de base suivant. Typiquement, l'instruction « Verify » est une instruction supplémentaire ajoutée au jeu d'instructions du microprocesseur 2.

Dans le même mode de réalisation, il est aussi possible de déclencher le contrôle d'intégrité à la fois en réponse au chargement d'une instruction de branchement et en réponse à l'exécution d'une instruction « verify ».

Dans un autre mode de réalisation, c'est une valeur spécifique d'un bit ou d'un groupe de bits des opcodes du jeu d'instructions du microprocesseur 2 qui déclenche la vérification de l'intégrité et l'initialisation du calcul de la signature du bloc de base suivant. Par exemple, à cet effet, le jeu d'instructions du microprocesseur 2 est modifié pour que chaque opcode comporte un bit supplémentaire ou un groupe de bits supplémentaires. Typiquement, si le microprocesseur détecte que la valeur de ce bit supplémentaire dans l'opcode chargé est égale à « 1 », alors il déclenche la vérification de l'intégrité et l'initialisation de la signature du bloc de base suivant avant d'exécuter cette instruction. Si au contraire, la valeur du bit supplémentaire de l'opcode chargé est égale à 0, le microprocesseur 2 ne déclenche pas ces opérations de vérification de l'intégrité et d'initialisation de la signature du bloc de base suivant.

Dans les modes de réalisation où la vérification de la valeur construite est déclenchée par une instruction spécifique, telle que l'instruction « verify », ou par une valeur spécifique d'un bit ou d'un groupe de bits des opcodes, les instructions de branchement à la fin des blocs de base peuvent être des instructions de branchement implicites.

L'initialisation de la valeur $C_k$ du bloc de base suivant et le contrôle d'intégrité ont été décrits jusqu'à présent comme étant déclenchés par la même instruction du code machine. Toutefois, l'initialisation de la valeur $C_k$ et le déclenchement du contrôle de l'intégrité peuvent être déclenchés par des instructions différentes du code machine. Dans ce cas, ces deux opérations ne sont alors pas nécessairement réalisées immédiatement l'une après l'autre. Par exemple, l'initialisation de la signature du bloc de base suivant peut être déclenchée en réponse à l'exécution d'une instruction de branchement et la vérification de l'intégrité peut être déclenchée seulement lorsqu'une instruction « Verify » est rencontrée dans le bloc de base en cours d'exécution.

Autres variantes :

Dans tous les modes de réalisation, les combinaisons de deux valeurs, tels que la valeur actuelle du paramètre v avec le vecteur d'initialisation IVk, n'est pas nécessairement réalisée avec un « ou exclusif ». Par exemple, en variante, le « ou exclusif » est remplacé par une opération d'arithmétique modulaire.

Ici, le vecteur d'initialisation $IV_k$ est d'abord choisi puis la valeur du paramètre v est déterminée pour que, en absence de faute d'exécution, les valeurs $C_k$ et $\Gamma_k$ correspondent. Toutefois, tous les modes de réalisation décrit ici peuvent être adaptés pour faire l'inverse, c'est-à-dire fixer d'abord la valeur du paramètre v, puis calculer le vecteur d'initialisation IVk pour que, en absence de faute d'exécution, les valeurs $C_k$ et $\Gamma_k$ correspondent.

Il est possible d'ajouter automatiquement des instructions supplémentaires de branchement inconditionnel au milieu d'un bloc de base pour le diviser en plusieurs blocs de base successifs. Cela permet notamment de déclencher plus fréquemment la vérification de l'intégrité du code machine.

Dans une autre variante, la valeur Ck n'est pas initialisée à partir du vecteur d'initialisation IVk mais à partir d'un autre vecteur d'initialisation IVKbis. Le vecteur IVKbis est indépendant du vecteur IVk. Comme le vecteur IVk, le vecteur $IV_{kbis}$ est enregistré dans le code du bloc de base BBk. Par exemple, le vecteur $IV_{kbis}$ est systématiquement enregistré après le vecteur $IV_k$ et chargé dans la mémoire 29 immédiatement après le chargement du vecteur IVk. Dans ce cas, les opérations de vérification de la valeur $C_{k-1}$ et d'initialisation de la valeur Ck ne sont pas systématiquement réalisées en même temps et en utilisant le même vecteur d'initialisation. Par exemple, l'initialisation de la valeur Ck peut être déclenchée par une instruction spécifique au milieu du bloc de base BBk et non pas nécessairement située au début de ce bloc de base BBk. La vecteur $IV_{kbis}$ est alors de préférence choisi pour être unique pour chaque bloc de base. Par exemple, il est tiré de façon aléatoire ou pseudo-aléatoire lors de la compilation du code machine.

Dans une autre variante, le code machine et en particulier les blocs de base sont instrumentés pour qu'une erreur d'exécution dans un branchement conditionnel puisse être détectée. Pour cela, le code machine est modifié comme décrit en référence aux figures 5 et 6 de la demande de brevet déposée par le présent déposant le 11 avril 2017 sous le n°FR1753175.

Il est possible d'ajouter dans le code machine des instructions d'activation et de désactivation d'un mode sécurisé lorsqu'elles sont exécutées par le microprocesseur. Dans le mode sécurisé, l'intégrité des blocs de base et du flot de contrôle est vérifiée comme décrit ici. Lorsque le mode sécurisé est désactivé, l'intégrité des blocs de base et du flot de contrôle n'est pas vérifiée. Ainsi, des portions du code machine peuvent être sécurisées tandis que d'autres portions ne le sont pas.

Les différents modes de réalisation décrits ici peuvent être combinés ensemble.

Avantages des modes de réalisation décrits ici :

Le module 28 compare la valeur construite $C_{k-1}$ à la valeur $\Gamma_{k-1}$. La valeur $\Gamma_{k-1}$ est déterminée lors de la génération du code machine 32. Ainsi, si une instruction à protéger du bloc $BB_{k-1}$ est modifiée lors de l'exécution du code machine, le module 28 est capable de détecter et signaler cette faute.

De plus, la valeur attendue $\Gamma_{k-1}$ peut seulement être calculée à partir d'un vecteur d'initialisation IVk qui se trouve dans le bloc de base suivant BBk. Dès lors, si le flot de contrôle est modifié lors de l'exécution du code machine 32 et que le bloc de base suivant $BB_k$ est remplacé par un autre bloc de base $BB_t$ différent, le vecteur d'initialisation $IV_t$ chargé à partir du bloc $BB_t$ est différent du vecteur d'initialisation $IV_k$. Dès lors, la valeur attendue $\Gamma_t$ calculée pour la signature du bloc $BB_{k-1}$ à partir du vecteur $IV_t$ est différente de la valeur initialement attendue $\Gamma_{k-1}$. Il est alors très peu probable que la valeur $C_{k-1}$ corresponde à la valeur $\Gamma_t$. Ainsi, le module 28 est aussi capable de détecter une modification du flot de contrôle. Pour faire cela, on notera que ce sont les mêmes données, c'est-à-dire les vecteurs d'initialisation contenus dans les blocs de base, qui sont utilisées pour faire ces deux vérifications. À cause de cela, les procédés décrits ici sont plus simples que les procédés connus tout en restant capables de vérifier à la fois l'intégrité du code machine et l'intégrité du flot de contrôle. En particulier, la vérification de l'intégrité du flot de contrôle ne nécessite pas de modifications supplémentaires du code machine en plus de celles déjà nécessaires pour vérifier l'intégrité du code machine. La vérification de l'intégrité du flot de contrôle ne nécessite pas non plus l'exécution par le module 28 de traitement supplémentaire qui ne serait pas utile si seule l'intégrité du code machine était vérifiée.

Le fait d'utiliser le même vecteur d'initialisation à la fois pour calculer la valeur $\Gamma_{k-1}$ et pour initialiser la valeur Ck renforce la sécurité du procédé. En effet, un attaquant peut essayer de modifier les instructions à protéger du bloc $BB_{k-1}$ et le vecteur d'initialisation $IV_k$, contenu dans le bloc $BB_k$, de manière à ce que le module 28 ne détecte pas ces modifications et ne signale pas une faute d'exécution. Toutefois, en faisant cela, l'attaquant modifie nécessairement aussi la valeur construite Ck de la signature du bloc BBk. Dès lors, le module 28 signalera quand même une faute au moment de la vérification de l'intégrité du bloc BBk.

Le fait d'utiliser la valeur du paramètre v pour calculer la valeur attendue ou la valeur construite de la signature du bloc de base précédent et de charger la valeur de ce paramètre lors de l'exécution du bloc de base précédent permet de faire fonctionner le procédé décrit ici même dans le cas où il existe plusieurs blocs de base précédents pour un même bloc de base suivant. De plus, l'utilisation du paramètre v relâche les contraintes sur le choix des vecteurs d'initialisation des blocs de base précédents. Cela simplifie donc la génération du code machine.

Le fait de calculer la valeur attendue ou la valeur construite en fonction de la condition de l'instruction de branchement conditionnelle qui termine le bloc de base précédent permet de déclencher le signalement d'une faute d'exécution en cas d'erreur d'aiguillage dans le flot d'instructions. Par exemple, cela permet de déclencher le signalement d'une faute d'exécution si le premier bloc de base est exécuté alors que la condition n'est pas vérifiée.

Le fait d'utiliser une fonction de chiffrement pour construire la valeur attendue $\Gamma_{k-1}$ à partir du vecteur IVk accroît la sécurité car il est alors très difficile de retrouver la valeur attendue $\Gamma_{k-1}$ en connaissant seulement le vecteur IVk. Par exemple, cela rend plus difficile les attaques dans lesquelles l'attaquant essaie de remplacer le bloc $BB_{k-1}$ par un autre bloc de base qui aurait la même signature. En effet, dans ce cas, la valeur attendue $\Gamma_{k-1}$ n'est pas facile à déterminer.

Le fait d'utiliser un homomorphisme pour construire la valeur de la signature permet de déterminer la valeur du paramètre v qui devra être utilisée sans qu'il soit nécessaire que cette fonction préprogrammée soit inversible.

Le fait d'utiliser pour la réalisation des fonctions $F_{cs}()$ et $F_{vs}()$ des fonctions de chiffrement et de déchiffrement asymétrique permet de garantir en plus soit l'authenticité du module 28 soit l'authenticité du code machine.

Le fait de choisir la fonction $F_{vs}()$ égale à la fonction identité simplifie le procédé.

## Revendications

1. Procédé d'exécution d'un code machine d'une fonction sécurisée par un microprocesseur, ce procédé comportant :

    a) la fourniture (150) du code machine, ce code machine comprenant une succession de blocs de base dans lesquels :

        - chaque bloc de base comporte une succession d'instructions systématiquement exécutées les unes après les autres lors de l'exécution du code machine par le microprocesseur, parmi ces instructions, au moins certaines d'entre elles étant des instructions à protéger,
        - chaque bloc de base débute à une adresse de branchement et se termine par une instruction de branchement vers une adresse de branchement d'un autre bloc de base, le bloc de base qui débute à l'adresse de branchement étant appelé « bloc de base suivant » et le bloc de base qui se termine par une instruction de branchement vers cette adresse de branchement étant appelé « bloc de base précédent »,

    b) lors de l'exécution (152) du code machine par le microprocesseur, le procédé comporte les opérations suivantes :

        1) le microprocesseur charge (154) puis décode (156) les instructions des blocs de base précédent et suivant du code machine, puis chaque instruction décodée est exécutée par une unité arithmétique et logique du microprocesseur,

        2) à chaque fois qu'une instruction à protéger du bloc de base précédent est chargée, un module matériel de sécurisation du microprocesseur construit (157), à l'aide d'une fonction $F_{cs}()$ préprogrammée, une nouvelle valeur d'une signature à partir de la valeur de cette instruction à protéger et de la précédente valeur de la signature, cette signature étant ainsi fonction des valeurs des différentes instructions à protéger du bloc de base précédent,

        3) le microprocesseur charge (162) un vecteur d'initialisation contenu dans le bloc de base suivant et le module matériel de sécurisation calcule (164), à partir de ce vecteur d'initialisation chargé et à l'aide d'une fonction $F_{vs}()$ préprogrammée, une valeur attendue pour la signature du bloc de base précédent,

        4) en réponse au chargement d'une instruction prédéterminée, le module matériel de sécurisation compare (166) la valeur construite de la signature à la valeur attendue de cette signature calculée à partir du vecteur d'initialisation chargé, et

        5) seulement si ces valeurs ne correspondent pas, le module matériel de sécurisation déclenche (170) le signalement d'une faute lors de l'exécution de ce code machine et, dans le cas contraire, inhibe un tel signalement.

2. Procédé selon la revendication 1, dans lequel :

    - le bloc de base suivant est aussi un bloc de base précédent pour un autre bloc de base du code machine de sorte que les opérations 1) à 5) sont aussi réalisées pour le bloc de base suivant, et
    - lors de l'exécution du bloc de base suivant, le module matériel de sécurisation initialise (160) la valeur construite de la signature du bloc de base suivant à partir du même vecteur d'initialisation que celui utilisé pour calculer la valeur attendue de la signature du bloc de base précédent, de sorte que valeur construite de la signature du bloc de base suivant dépend aussi de ce vecteur d'initialisation.

3. Procédé selon l'une quelconque des revendications précédentes, dans lequel :

    - lors de l'opération 3), le module matériel de sécurisation calcule (164) la valeur attendue de la signature du bloc de base précédent, en plus, à partir de la valeur chargée d'un paramètre v de sorte que la valeur attendue de la signature du bloc de base précédent varie en fonction de cette valeur chargée du paramètre v ou, lors de l'opération 2), le module matériel de sécurisation construit la nouvelle valeur de la signature du bloc de base précédent, en plus, à partir de la valeur chargée d'un paramètre v de sorte que la valeur construite de la signature du bloc de base précédent varie en fonction de cette valeur chargée du paramètre v, et

- le bloc de base précédent comporte une instruction prédéterminée qui, lorsqu'elle est exécutée par le microprocesseur, provoque le chargement de la valeur du paramètre v, cette valeur du paramètre v étant contenue dans ce bloc de base précédent et tel que, en absence de modification des instructions à protéger du bloc de base précédent, la valeur attendue calculée lors de l'opération 3) correspond à la valeur construite de la signature de ce bloc de base précédent.

**4.** Procédé selon l'une quelconque des revendications précédentes, dans lequel :

- l'opération a) comporte la fourniture d'un bloc de base précédent se terminant par une instruction de branchement conditionnelle qui, lorsqu'une condition est vérifiée provoque, lorsqu'elle est exécutée par le microprocesseur, un branchement vers un premier bloc de base suivant et, en alternance, lorsque la condition n'est pas vérifiée, provoque, lorsqu'elle est exécutée par le microprocesseur, un branchement vers un second bloc de base suivant différent du premier bloc de base suivant, et

- lors de l'opération 3), le module matériel de sécurisation calcule la valeur attendue de la signature du bloc de base précédent, en plus, à partir d'une valeur contenue dans un registre, cette valeur n'étant pas la même selon que la condition est vérifiée ou pas, de sorte que la valeur attendue de la signature du bloc de base précédent varie en fonction de cette valeur contenue dans ce registre ou, lors de l'opération 2), le module matériel de sécurisation construit la nouvelle valeur de la signature du bloc de base précédent, en plus, à partir de la valeur contenue dans ce registre de sorte que la valeur construite de la signature du bloc de base précédent varie en fonction de cette valeur contenue dans ce registre.

**5.** Procédé selon l'une quelconque des revendications précédentes, dans lequel lors de l'opération 2), la fonction préprogrammée $F_{cs}()$ mise en œuvre est une fonction de chiffrement à l'aide d'une clef secrète stockée dans une mémoire sécurisée du microprocesseur, cette mémoire sécurisée étant uniquement accessible par des composants internes du microprocesseur.

**6.** Procédé selon l'une quelconque des revendications précédentes, dans lequel lors de l'opération 2), la fonction préprogrammée $F_{cs}()$ est un homomorphisme algébrique.

**7.** Procédé selon la revendication 6, dans lequel :

- les fonctions préprogrammées $F_{cs}()$ et $F_{vs}()$ mettent en œuvre, respectivement, une fonction de chiffrement asymétrique à l'aide d'une clé publique et une fonction de déchiffrement à l'aide d'une clé privée correspond à la clé publique, ou
- les fonctions préprogrammées $F_{cs}()$ et $F_{vs}()$ mettent en œuvre, respectivement, une fonction de déchiffrement asymétrique à l'aide d'une clé privée et une fonction de chiffrement à l'aide d'une clé publique correspond à la clé privée.

**8.** Procédé selon l'une quelconque des revendications 1 à 7, dans lequel la fonction $F_{vs}()$ est la fonction identité.

**9.** Appareil électronique (1) comportant :

- une mémoire (4) dans laquelle est enregistré un code machine d'une fonction sécurisée, ce code machine comprenant une succession de blocs de base dans lesquels :

- chaque bloc de base comporte une succession d'instructions systématiquement exécutées les unes après les autres lors de l'exécution du code machine par un microprocesseur, parmi ces instructions, au moins certaines d'entre elles étant des instructions à protéger,
- chaque bloc de base débute à une adresse de branchement et se termine par une instruction de branchement vers une adresse de branchement d'un autre bloc de base, le bloc de base qui débute à l'adresse de branchement étant appelé « bloc de base suivant » et le bloc de base qui se termine par une instruction de branchement vers cette adresse de branchement étant appelé « bloc de base précédent »,

- le microprocesseur (2) comportant une unité (10) arithmétique et logique et un module matériel (28) de sécurisation, ce microprocesseur étant apte à exécuter le code machine enregistré dans la mémoire (4), ce microprocesseur étant apte, lors de l'exécution du code machine, à charger puis à décoder les instructions des blocs de base précédent et suivant du code machine, et l'unité arithmétique et logique est apte à exécuter chaque instruction décodée,
- le module matériel (28) de sécurisation est apte, lors de l'exécution du code machine, à réaliser les opérations suivantes :

- à chaque fois qu'une instruction à protéger du bloc de base précédent est chargée, le module matériel de sécurisation du microprocesseur construit, à l'aide d'une fonction $F_{CS}()$ préprogrammée, une nouvelle valeur d'une signature à partir de la valeur de cette instruction à protéger et de la précédente valeur de la signature, cette signature étant ainsi fonction des valeurs des différentes instructions à protéger du bloc de base précédent,
- à chaque fois que le microprocesseur charge un vecteur d'initialisation contenu dans le bloc de base suivant le module matériel de sécurisation calcule, à partir de ce vecteur d'initialisation chargé et à l'aide d'une fonction $F_{VS}()$ préprogrammée, une valeur attendue pour la signature du bloc de base précédent,
- en réponse au chargement d'une instruction prédéterminée, le module matériel de sécurisation compare la valeur construite de la signature à la valeur attendue de cette signature calculée à partir du vecteur d'initialisation chargé, et
- seulement si ces valeurs ne correspondent pas, le module matériel de sécurisation déclenche le signalement d'une faute lors de l'exécution de ce code machine et, dans le cas contraire, inhibe un tel signalment.

**Patentansprüche**

1. Verfahren zur Ausführung eines Maschinencodes einer gesicherten Funktion durch einen Mikroprozessor, wobei dieses Verfahren aufweist:

a) die Bereitstellung (150) des Maschinencodes, wobei dieser Maschinencode eine Folge von Basisblöcken enthält, in denen:

- jeder Basisblock eine Folge von Anweisungen aufweist, die systematisch nacheinander bei der Ausführung des Maschinencodes durch den Mikroprozessor ausgeführt werden, wobei zumindest bestimmte dieser Anweisungen zu schützende Anweisungen sind,

- jeder Basisblock an einer Verzweigungsadresse beginnt und mit einer Verzweigungsanweisung zu einer Verzweigungsadresse eines anderen Basisblocks endet, wobei der Basisblock, der an der Verzweigungsadresse beginnt, "folgender Basisblock" genannt wird, und der Basisblock, der mit einer Verzweigungsanweisung zu dieser Verzweigungsadresse endet, "vorhergehender Basisblock" genannt wird,

b) bei der Ausführung (152) des Maschinencodes durch den Mikroprozessor das Verfahren die folgenden Vorgänge aufweist:

1) der Mikroprozessor lädt (154) und decodiert (156) dann die Anweisungen der vorhergehenden und folgenden Basisblöcke des Maschinencodes, dann wird jede decodierte Anweisung von einer arithmetischen und logischen Einheit des Mikroprozessors ausgeführt,
2) jedes Mal, wenn eine zu schützende Anweisung des vorhergehenden Basisblocks geladen wird, konstruiert (157) ein Sicherungs-Hardwaremodul des Mikroprozessors mit Hilfe einer vorprogrammierten Funktion $F_{CS}()$ einen neuen Wert einer Signatur ausgehend vom Wert dieser zu schützenden Anweisung und vom vorhergehenden Wert der Signatur, wobei diese Signatur so von den Werten der verschiedenen zu schützenden Anweisungen des vorhergehenden Basisblocks abhängt,
3) der Mikroprozessor lädt (162) einen im folgenden Basisblock enthaltenen Initialisierungsvektor, und das Sicherungs-Hardwaremodul berechnet (164), ausgehend von diesem geladenen Initialisierungsvektor und mit Hilfe einer vorprogrammierten Funktion $F_{VS}()$, einen erwarteten Wert für die Signatur des vorhergehenden Basisblocks,
4) als Antwort auf das Laden einer vorbestimmten Anweisung vergleicht (166) das Sicherungs-Hardwaremodul den konstruierten Wert der Signatur mit dem ausgehend von dem geladenen Initialisierungsvektor berechneten erwarteten Wert dieser Signatur, und
5) nur wenn diese Werte nicht übereinstimmen, löst das Sicherungs-Hardwaremodul die Meldung eines Fehlers bei der Ausführung dieses Maschinencodes aus (170), und im gegenteiligen Fall verhindert es eine solche Meldung.

2. Verfahren nach Anspruch 1, wobei:

- der folgende Basisblock auch ein vorhergehender Basisblock für einen anderen Basisblock des Maschinencodes ist, so dass die Vorgänge 1) bis 5) auch für den folgenden Basisblock durchgeführt werden, und
- bei der Ausführung des folgenden Basisblocks das Sicherungs-Hardwaremodul den konstruierten Wert der Signatur des folgenden Basisblocks ausgehend von dem gleichen Initialisierungsvektor wie derjenige initialisiert (160), der zur Berechnung des erwarteten Werts der Signatur des vorhergehenden Basisblocks verwendet wird, so dass der konstruierte Wert der Signatur des folgenden Basisblocks auch von diesem Initialisierungsvektor abhängt.

3. Verfahren nach einem der vorhergehenden Ansprüche, wobei:

- das Sicherungs-Hardwaremodul beim Vorgang 3) den erwarteten Wert der Signatur des vorhergehenden Basisblocks zusätzlich ausgehend vom geladenen Wert eines Parameters v berechnet (164), so dass der erwartete Wert der Signatur des vorhergehenden Basisblocks abhängig von diesem geladenen Wert des Parameters v variiert, oder das Sicherungs-Hardwaremodul beim Vorgang 2) den neuen Wert der Signatur des vorhergehenden Basisblocks zusätzlich ausgehend vom geladenen Wert eines Parameters v konstruiert, so dass der konstruierte Wert der Signatur des vorhergehenden Basisblocks abhängig von diesem geladenen Wert des Parameters v variiert, und
- der vorhergehende Basisblock eine vorbestimmte Anweisung aufweist, die, wenn sie vom Mikroprozessor ausgeführt wird, das Laden des Werts des Parameters v bewirkt, wobei dieser Wert des Parameters v in diesem vorhergehenden Basisblock enthalten und so ist, dass in Abwesenheit einer Änderung der zu schützenden Anweisungen des vorhergehenden Basisblocks der beim Vorgang 3) berechnete erwartete Wert dem konstruierten Wert der Signatur dieses vorhergehenden Basisblocks entspricht.

4. Verfahren nach einem der vorhergehenden Ansprüche, wobei:

- der Vorgang a) die Bereitstellung eines vorhergehenden Basisblocks aufweist, der mit einer bedingten Verzweigungsanweisung endet, die, wenn eine Bedingung erfüllt ist, wenn sie vom Mikroprozessor ausgeführt wird eine Verzweigung zu einem ersten folgenden Basisblock bewirkt, und im Wechsel, wenn die Bedingung nicht erfüllt ist, wenn sie vom Mikroprozessor ausgeführt wird eine Verzweigung zu einem zweiten folgenden Basisblock bewirkt, der sich vom ersten folgenden Basisblock unterscheidet, und
- beim Vorgang 3) das Sicherungs-Hardwaremodul den erwarteten Wert der Signatur des vorhergehenden Basisblocks zusätzlich ausgehend von einem in einem Register enthaltenen Wert berechnet, wobei dieser Wert nicht der gleiche ist, je nachdem, ob die Bedingung erfüllt ist oder nicht, so dass der erwartete Wert der Signatur des vorhergehenden Basisblocks abhängig von diesem in diesem Register enthaltenen Wert variiert, oder, beim Vorgang 2) das Sicherungs-Hardwaremodul den neuen Wert der Signatur des vorhergehenden Basisblocks zusätzlich ausgehend vom in diesem Register enthaltenen Wert konstruiert, so dass der konstruierte Wert der Signatur des vorhergehenden Basisblocks abhängig von diesem in diesem Register enthaltenen Wert variiert.

5. Verfahren nach einem der vorhergehenden Ansprüche, wobei im Vorgang 2) die angewendete vorprogrammierte Funktion $F_{cs}()$ eine Verschlüsselungsfunktion mit Hilfe eines geheimen Schlüssel ist, der in einem gesicherten Speicher des Mikroprozessors gespeichert ist, wobei dieser gesicherte Speicher nur über interne Bauteile des Mikroprozessors zugänglich ist.

6. Verfahren nach einem der vorhergehenden Ansprüche, wobei im Vorgang 2) die vorprogrammierte Funktion $F_{cs}()$ ein algebraischer Homomorphismus ist.

7. Verfahren nach Anspruch 6, wobei:

- die vorprogrammierten Funktionen $F_{cs}()$ und $F_{vs}()$ je eine asymmetrische Verschlüsselungsfunktion mit Hilfe eines öffentlichen Schlüssels und eine Entschlüsselungsfunktion mit Hilfe einem öffentlichen Schlüssel entsprechenden privaten Schlüssel anwenden, oder
- die vorprogrammierten Funktionen $F_{cs}()$ und $F_{vs}()$ je eine asymmetrische Entschlüsselungsfunktion mit Hilfe eines privaten Schlüssels und eine Verschlüsselungsfunktion mit Hilfe eines dem privaten Schlüssel entsprechenden öffentlichen Schlüssels anwenden.

8. Verfahren nach einem der Ansprüche 1 bis 7, wobei die Funktion $F_{vs}()$ die Identitätsfunktion ist.

9. Elektronisches Gerät (1), das aufweist:

- einen Speicher (4), in dem ein Maschinencode einer gesicherten Funktion gespeichert ist, wobei dieser Maschinencode eine Folge von Basisblöcken enthält, in denen:

- jeder Basisblock eine Folge von Anweisungen aufweist, die systematisch nacheinander bei der Ausführung des Maschinencodes durch einen Mikroprozessor ausgeführt werden, wobei zumindest bestimmte dieser Anweisungen zu schützende Anweisungen sind,
- jeder Basisblock an einer Verzweigungsadresse beginnt und mit einer Verzweigungsanweisung zu einer Verzweigungsadresse eines anderen Basisblocks endet, wobei der Basisblock, der an der Verzweigungsadresse beginnt, "folgender Basisblock" genannt wird, und der Basisblock, der mit einer Verzweigungsanweisung zu dieser Verzweigungsadresse endet, "vorhergehender Basisblock" genannt wird,

- wobei der Mikroprozessor (2) eine arithmetische und logische Einheit (10) und ein Sicherungs-Hardwaremodul (28) aufweist, wobei dieser Mikroprozessor fähig ist, den im Speicher (4) gespeicherten Maschinencode auszuführen, wobei dieser Mikroprozessor bei der Ausführung des Maschinencodes fähig ist, die Anweisungen der vorhergehenden und folgenden Basisblöcke des Maschinencodes zu laden und dann zu decodieren, und die arithmetische und logische Einheit fähig ist, jede decodierte Anweisung auszuführen,
- das Sicherungs-Hardwaremodul (28) bei der Ausführung des Maschinencodes fähig ist, die folgenden Vorgänge durchzuführen:

- jedes Mal, wenn eine zu schützende Anweisung des vorhergehenden Basisblocks geladen wird, konstruiert das Sicherungs-Hardwaremodul des Mikroprozessors mit Hilfe einer vorprogrammierten Funktion $F_{CS}()$ einen neuen Wert einer Signatur ausgehend vom Wert dieser zu schützenden Anweisung und vom vorhergehenden Wert der Signatur, wobei diese Signatur so von den Werten der verschiedenen zu schützenden Anweisungen des vorhergehenden Basisblocks abhängt,
- jedes Mal, wenn der Mikroprozessor einen im folgenden Basisblock enthaltenen Initialisierungsvektor lädt, berechnet das Sicherungs-Hardwaremodul ausgehend von diesem geladenen Initialisierungsvektor und mit Hilfe einer vorprogrammierten Funktion $F_{vs}()$ einen erwarteten Wert für die Signatur des vorhergehenden Basisblocks,
- als Antwort auf das Laden einer vorbestimmten Anweisung vergleicht das Sicherungs-Hardwaremodul den konstruierten Wert der Signatur mit dem erwarteten Wert dieser Signatur berechnet ausgehend vom geladenen Initialisierungsvektor, und
- nur wenn diese Werte nicht übereinstimmen, löst das Sicherungs-Hardwaremodul die Meldung eines Fehlers bei der Ausführung dieses Maschinencode aus, und im gegenteiligen Fall verhindert es eine solche Meldung.

**Claims**

1. Method for executing a machine code of a secure function by a microprocessor, this method comprising:

a) the supply (150) of the machine code, this machine code comprising a succession of basic blocks in which:

- each basic block comprises a succession of instructions systematically executed one after the other upon the execution of the machine code by the microprocessor, among these instructions, at least some of them being instructions to be protected,
- each basic block begins at a branch address and ends with a branch instruction to a branch address of another basic block, the basic block which begins at the branch address being called "next basic block" and the basic block which ends with a branch instruction to this branch address being called "preceding basic block",

b) upon the execution (152) of the machine code by the microprocessor, the method comprises the following operations:

1) the microprocessor loads (154) then decodes (156) the instructions of the preceding and next basic blocks of the machine code, then each decoded instruction is executed by an arithmetic and logic unit of the microprocessor,
2) each time an instruction to be protected of the preceding basic block is loaded, a hardware securing module of the microprocessor constructs (157), using a preprogrammed function $F_{CS}()$, a new value of a signature from the value of this instruction to be protected and from the preceding value of the signature, this signature being thus a function of the values of the different instructions to be protected of the preceding basic block,

3) the microprocessor loads (162) an initialization vector contained in the next basic block and the hardware securing module calculates (164), from this loaded initialization vector and using a preprogrammed function $F_{VS}()$, an expected value for the signature of the preceding basic block,

4) in response to the loading of a predetermined instruction, the hardware securing module compares (166) the constructed value of the signature to the expected value of this signature calculated from the loaded initialization vector, and

5) only if these values do not correspond, the hardware securing module triggers (170) the signaling of a fault upon the execution of this machine code and, otherwise, inhibits such signaling.

2. Method according to Claim 1, wherein:

   - the next basic block is also a preceding basic block for another basic block of the machine code such that the operations 1) to 5) are also performed for the next basic block, and
   - upon the execution of the next basic block, the hardware securing module initializes (160) the constructed value of the signature of the next basic block from the same initialization vector as that used to calculate the expected value of the signature of the preceding basic block, such that the constructed value of the signature of the next basic block depends also on this initialization vector.

3. Method according to either one of the preceding claims, wherein:

   - in the operation 3), the hardware securing module calculates (164) the expected value of the signature of the preceding basic block, in addition, from the loaded value of a parameter v such that the expected value of the signature of the preceding basic block varies as a function of this loaded value of the parameter v or, in the operation 2), the hardware securing module constructs the new value of the signature of the preceding basic block, in addition, from the loaded value of a parameter v such that the constructed value of the signature of the preceding basic block varies as a function of this loaded value of the parameter v, and
   - the preceding basic block comprises a predetermined instruction which, when it is executed by the microprocessor, provokes the loading of the value of the parameter v, this value of the parameter v being contained in this preceding basic block and such that, in the absence of modification of the instructions to be protected of the preceding basic block, the expected value calculated in the operation 3) corresponds to the constructed value of the signature of this preceding basic block.

4. Method according to any one of the preceding claims, wherein:

   - the operation a) comprises the supply of a preceding basic block ending with a conditional branch instruction which, when a condition is satisfied, provokes, when it is executed by the microprocessor, a branch to a first next basic block and, alternately, when the condition is not satisfied, provokes, when it is executed by the microprocessor, a branch to a second next basic block different from the first next basic block, and
   - in the operation 3), the hardware securing module calculates the expected value of the signature of the preceding basic block, in addition, from a value contained in a register, this value not being the same according to whether the condition is satisfied or not, such that the expected value of the signature of the preceding basic block varies as a function of this value contained in this register or, in the operation 2), the hardware securing module constructs the new value of the signature of the preceding basic block, in addition, from the value contained in this register such that the constructed value of the signature of the preceding basic block varies as a function of this value contained in this register.

5. Method according to any one of the preceding claims, wherein, in the operation 2), the preprogrammed function $F_{cs}()$ implemented is an encryption function using a secret key stored in a secure memory of the microprocessor, this secure memory being only accessible by internal components of the microprocessor.

6. Method according to any one of the preceding claims, wherein, in the operation 2), the preprogrammed function $F_{cs}()$ is an algebraic homomorphism.

7. Method according to Claim 6, wherein:

   - the preprogrammed functions $F_{cs}()$ and $F_{vs}()$ implement, respectively, an asymmetrical encryption function using a public key and a decryption function using a private key which corresponds to the public key, or
   - the preprogrammed functions $F_{cs}()$ and $F_{vs}()$ implement, respectively, an asymmetrical encryption function using a private key and an encryption function using a public key which corresponds to the private key.

8. Method according to any one of Claims 1 to 7, wherein the function $F_{VS}()$ is the identity function.

9. Electronic device (1) comprising:

- a memory (4) in which is stored a machine code of a secure function, this machine code comprising a succession of basic blocks in which:

- each basic block comprises a succession of instructions systematically executed one after the other upon the execution of the machine code by a microprocessor, among these instructions, at least some of them being instructions to be protected,
- each basic block begins at a branch address and ends with a branch instruction to a branch address of another basic block, the basic block which begins at the branch address being called "next basic block" and the basic block which ends with a branch instruction to this branch address being called "preceding basic block",

- the microprocessor (2) comprising an arithmetic and logic unit (10) and a hardware securing module (28), this microprocessor being capable of executing the machine code stored in the memory (4), this microprocessor being capable, upon the execution of the machine code, of loading then of decoding the instructions of the preceding and next basic blocks of the machine code, and the arithmetic and logic unit is capable of executing each decoded instruction,
- the hardware securing module (28) is capable, upon the execution of the machine code, of performing the following operations:

- each time an instruction to be protected of the preceding basic block is loaded, the hardware securing module of the microprocessor constructs, using a preprogrammed function $F_{CS}()$, a new value of a signature from the value of this instruction to be protected and from the preceding value of the signature, this signature being thus a function of the values of the different instructions to be protected of the preceding basic block,
- each time the microprocessor loads an initialization vector contained in the next basic block, the hardware securing module calculates, from this loaded initialization vector and using a preprogrammed function $F_{VS}()$, an expected value for the signature of the preceding basic block,
- in response to the loading of a predetermined instruction, the hardware securing module compares the constructed value of the signature to the expected value of this signature calculated from the loaded initialization vector, and
- only if these values do not correspond, the hardware securing module triggers the signaling of a fault upon the execution of this machine code and, otherwise, inhibits such signaling.

Fig. 1

Fig. 2

Fig. 3

Fig. 4

Fig. 5

**EP 3 685 259 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2017124322 A1
- CA 2327037 A1
- FR 2985337 A1

**Littérature non-brevet citée dans la description**

- **RUAN DE CLERCQ et al.** SOFIA : Software and Control Flow Integrity Architecture. Elsevier, Computers & Security, vol. 68, 16-35